(19)

Europäisches
Patentamt
European
Patent Office
Office européen
des brevets

(11) **EP 4 410 407 A1**

(12) **EUROPEAN PATENT APPLICATION**

(43) Date of publication:
**07.08.2024 Bulletin 2024/32**

(21) Application number: **23315020.0**

(22) Date of filing: **01.02.2023**

(51) International Patent Classification (IPC):
**B01D 61/42** (2006.01)   **B01D 61/46** (2006.01)
**B01D 67/00** (2006.01)   **B01D 71/02** (2006.01)
**B01D 71/50** (2006.01)   **C02F 1/469** (2023.01)

(52) Cooperative Patent Classification (CPC):
**B01D 61/427; B01D 61/461; B01D 67/00791;
C02F 1/4698;** B01D 71/02; B01D 71/0211;
B01D 71/50; B01D 2325/022

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Centre National de la Recherche Scientifique
75016 Paris (FR)**
• **Ecole Normale Supérieure
75005 Paris (FR)**
• **Sorbonne Université
75006 Paris (FR)**

• **Université Paris Cité
75006 Paris (FR)**

(72) Inventors:
• **Abdelghani Idrissi, Soufiane
75005 PARIS (FR)**
• **Ries, Lucie
94400 VITRY SUR SEINE (FR)**
• **Siria, Alessandro
75012 PARIS (FR)**
• **Bocquet, Lydéric
75013 PARIS (FR)**

(74) Representative: **Brevalex
Tour Trinity
1 B Place de la Défense
92400 Courbevoie (FR)**

(54) **REVERSE ELECTRO-OSMOTIC FILTRATION EXPLOITING NANOFLUIDIC TRANSPORT THROUGH ASYMMETRIC MEMBRANE**

(57)   The present invention relates to a process for purifying an electrolyte solution comprising the application of an alternating electric field between a first and a second electrode resulting in solvent transfer and solute filtration through an asymmetric membrane. The invention also relates to a system for purifying an electrolyte solution using such process.

FIG. 1

EP 4 410 407 A1

**Description**

**FIELD OF THE INVENTION**

The present invention relates to a continuous process for purifying an electrolyte solution comprising the application of an alternating electric field between a first and a second electrode resulting in solvent transfer and solute filtration through an asymmetric membrane. The invention also relates to a system for purifying an electrolyte solution using such process.

The references in square brackets **[X]** refer to the list of references at the end of the examples.

**BACKGROUND OF THE INVENTION**

Global water demand for world population is a major issue of the ecological transition. Indeed, climate change, population increase, and the emergence of developing countries make these needs growing, access to water is therefore a key element for the future of our modern societies.

The oceans represent a gigantic source of water that can potentially be exploited to meet this demand, provided that it can be desalinated with low costs, cleanly and sustainably. On the other hand, non-saline water sources such as rivers suffer from the presence of micropollutants even after conventional treatment. Also, water purification finds an important application for hydrogen production by electrolysis, where pure water is needed.

Many technologies have been developed for the filtration of pollutants and desalination. Reverse osmosis (RO) is one of the most deployed techniques for water treatment **[1] [2]**. Other processes such as capacitive deionization or electrodialysis have made significant progress in the past decades. However, these different processes suffer from several issues which limit their large-scale deployment **[3] [4] [5]**.

The efficiency of the membranes used in these different techniques plays an important role on the performance of the processes. New materials have been developed in the last decades to optimize the water transport while keeping important sieving properties **[6]**. The nature of the materials as well as their architecture are important parameters allowing the optimization of their performances. The emergence of 2D materials such as graphene oxide or $MoS_2$ allowed to improve the water transport properties for filtration and desalination **[7] [8]**. In addition, understanding the fundamental phenomena taking place at nanoscale offers the possibility to target macroscopic materials with unique transport properties, which can potentially offer new perspectives for desalination, filtration and harvesting energy. However, the fabrication of optimized nanostructured materials with long cycle life remains complex, costly, and is therefore a challenge of high importance.

Some technologies, as the invention presented in the patent application EP3862069, show that water purification and desalination using electro-osmotic forcing can be achieved with reasonable voltages comparable with standard pressure driven technology. However macroscopic membranes and capacitive electrodes operating under electrostatic forcing are known to suffer from polarization effects leading to a dramatic decrease of performances over relatively short times. Indeed, the accumulation of charges at the two sides of the membrane and also at the electrode/electrolyte interface led to counter electric potentials that cancel the overall EO forcing. If this parasitic effect can be suppressed with conventional techniques like systematically short-circuiting the electrodes during the operation to reset the electrostatic environment, the overall performances of the process are limited hindering the application of the technology for out-of-lab applications.

In searching for a solution to the various technical problems associated with the prior art, the applicant surprisingly discovered a new technique for water treatment based on electro-osmotic flow (EO flow) wherein the continuous transport of water through a selective membrane is maintained by applying an external AC voltage on the membrane.

**BRIEF DESCRIPTION OF THE DRAWINGS**

FIG.1 (a) schematically shows an exemplary system according to the present invention, involving a composite asymmetric membrane element 30.
FIG.1 (b) schematically shows an exemplary system according to the present invention, involving an asymmetric membrane element 30 comprising a single material.
FIG.1 (c) schematically shows an exemplary system according to the present invention, involving an asymmetric membrane element 30 comprising two materials.

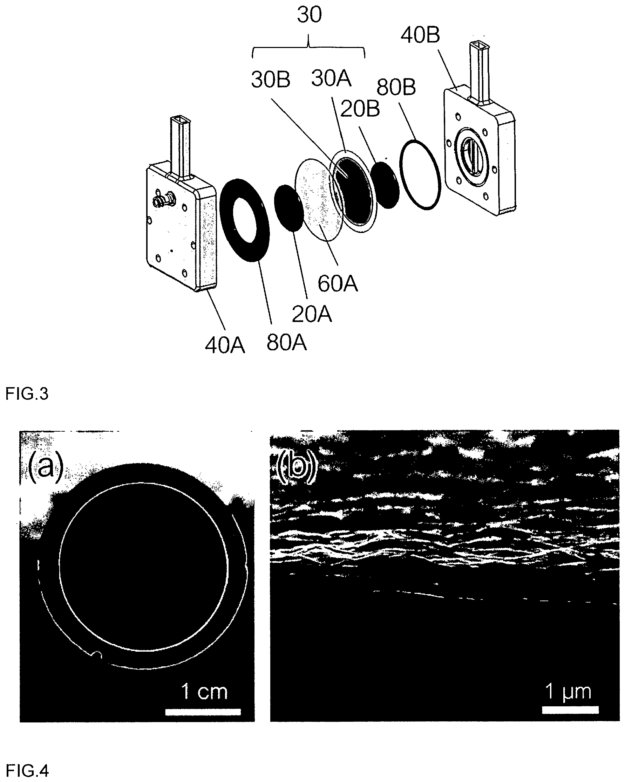

FIG. 2 schematically shows an exemplary system according to the present invention further comprising a rubber flat seal 80A and one rubber thoric seal 80B.
FIG.3 (a) photographically shows a composite asymmetric membrane.
FIG.3 (b) shows a SEM cross section image of 2D lamellar membrane.
FIG.4 shows an X-ray diffractogram of GO- and MoS2 multilayers membranes showing interlayers of 0.83 nm and 0.62 nm respectively.
FIG.5. (a) shows a graphic comprising the measured flow rate for EO driven experiments and pressure-driven experiments of an asymmetric membrane with a charged submembrane of polycarbonate (PC) and a semi-permeable submembrane of MoS2.

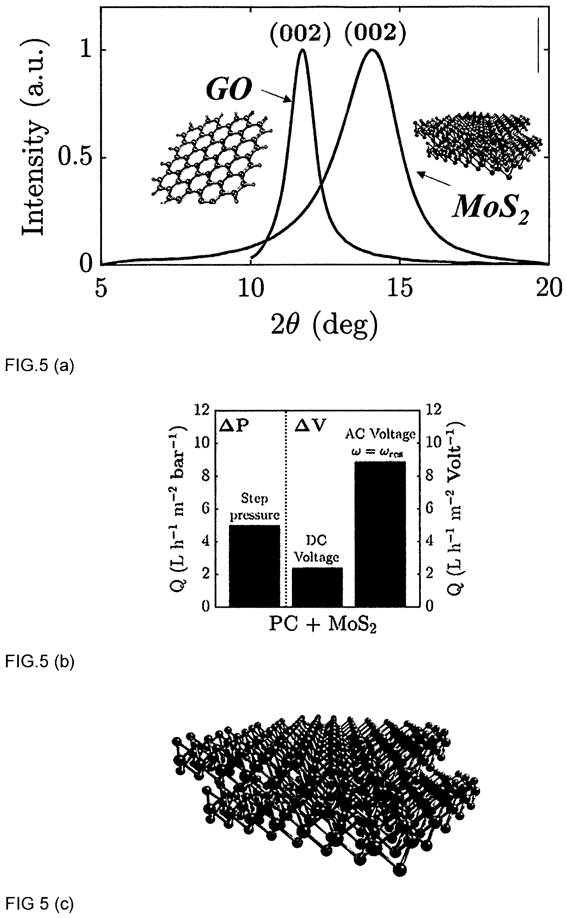

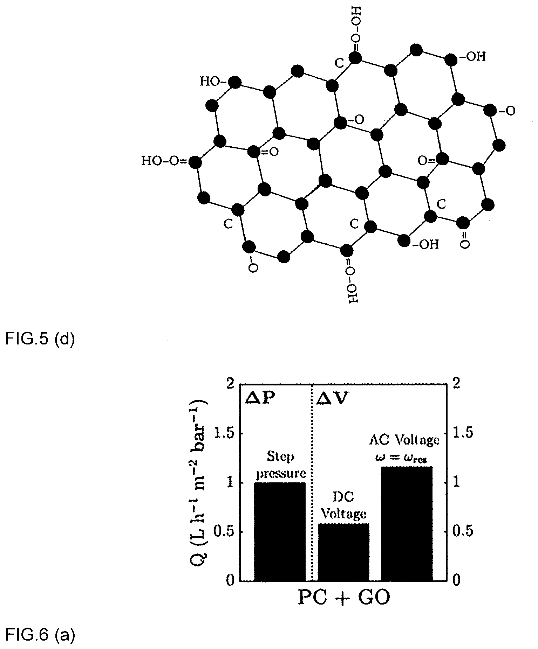

FIG. 5. (b) schematically shows the structure of two stacked monolayers of MoS2 (wherein one central layer of molybdenum atoms is comprised in between two layers of sulfur atoms.

FIG.5. (c) shows a graphic comprising the measured flow rate for EO driven experiments and pressure-driven experiments of an asymmetric membrane with a charged submembrane of polycarbonate (PC) and a semi-permeable submembrane of GO.

FIG. 5. (d) schematically shows the structure of one monolayer of graphene oxide [11]

FIG.6 (a) shows a I-V response of the system for: electrodes, PC membrane, and asymmetric membranes (PC+GO & PC+MoS2). It shows the ionic current under voltage drop for different configurations: the cell without membrane and with a bare support PC membrane (symmetric) shows a fully symmetric response with no discrepancies between ionic current under positive and negative voltages. On the other hand, the composite membranes are characterized by an ionic transport with larger current under negative voltages respect with positive forcing (the asymmetry can be reversed by changing the orientation of the composite membrane respect with the ground electrode). The asymmetry in ionic transport is then translated to an asymmetry in the EO water transport leading to the generation of an asymmetric induced water flux.

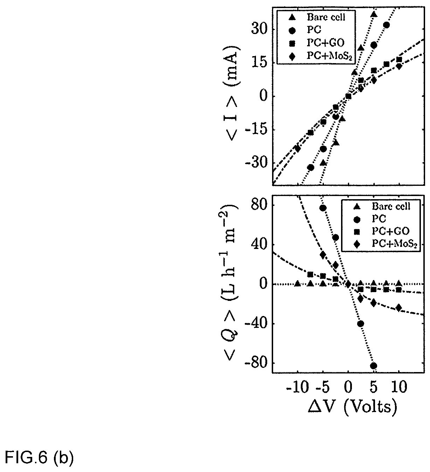

FIG.6 (b) shows the EO flow and current dynamic responses of the asymmetric membranes under alternating electric field (amplitude: 10V, frequency 2.5 Hz). It shows the measured dynamic responses both in current and flow rate of the composite membranes under AC voltage. The EO flow rates reported are highly asymmetric leading to a net transport of water from one side of the membrane to the other.

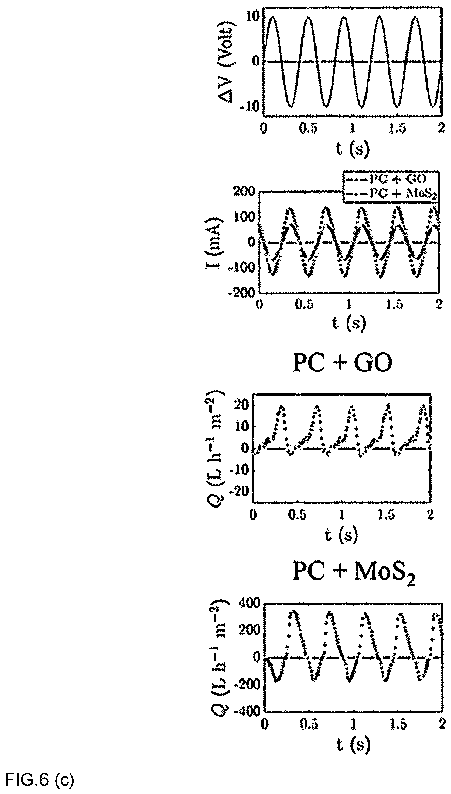

FIG.6 (c) shows the evolution of the net volume of permeate through asymmetric membranes for several frequencies (amplitude: 10V).

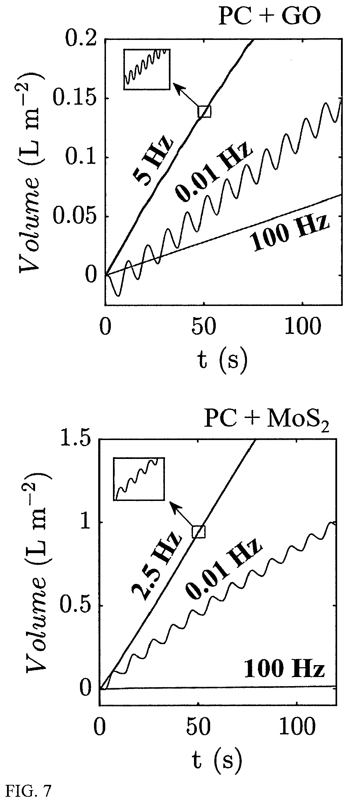

FIG.7 schematically shows an example of a vessel 40A or 40B comprising walls 401 and an outlet pipe 402 subdivided in two parts; a pipe sub-vessel 402A and an hyperbolic sub-vessel 402B, wherein the pipe diameter is w, the larger opening of the hyperbolic sub-vessel has a dimension y, the narrower opening of the hyperbolic sub-vessel has a dimension x and the height of the hyperbolic sub-vessel has a dimension z.

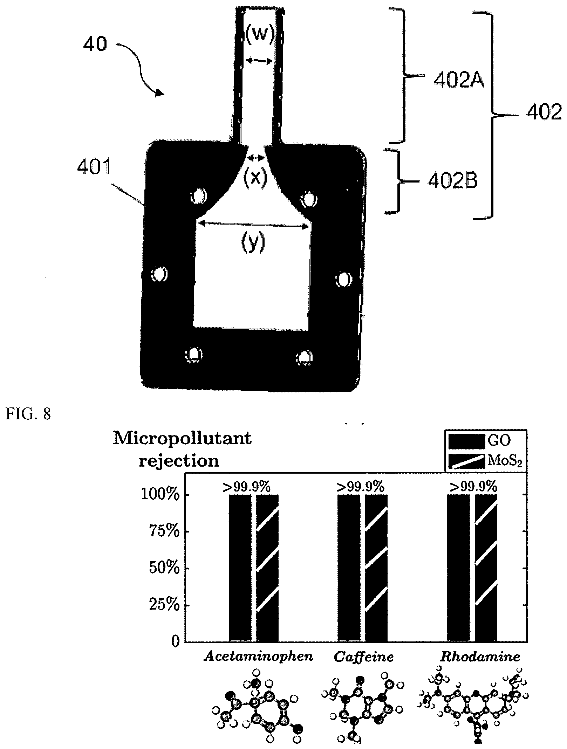

FIG.8 shows the measured rejection rate of micro-pollutants as well as their molecular structures (acetaminophen, caffeine and Rhodamine) for PC+GO & PC+MoS2 membrane.

## DEFINITIONS

Unless defined otherwise, all the technical and scientific terms used herein have the same meaning as those generally understood by one of ordinary skill in the art to which the invention pertains. Generally, the nomenclature used herein and the experiment methods, which will be described below, are those well-known and commonly employed in the art.

To facilitate an understanding of the present invention, a number of terms and phrases are defined below:

As used herein other than the claims, the terms "a," "an," "the," and/or "said" means one or more. As used herein in the claim(s), when used in conjunction with the words "comprise," "comprises" and/or "comprising," the words "a," "an," "the," and/or "said" may mean one or more than one. As used herein and in the claims, the terms "having," "has," "is," "have," "including," "includes," and/or "include" has the same meaning as "comprising," "comprises," and "comprise." As used herein and in the claims "another" may mean at least a second or more. As used herein and in the claims, "about" refers to any inherent measurement error or a rounding of digits for a value (e.g., a measured value, calculated value such as a ratio), and thus the term "about" may be used with any value and/or range.

The phrase "a combination thereof" "a mixture thereof" and such like following a listing, the use of "and/or" as part of a listing, a listing in a table, the use of "etc." as part of a listing, the phrase "such as," and/or a listing within brackets with "e.g.," or i.e., refers to any combination (e.g., any sub-set) of a set of listed components, and combinations and/or mixtures of related species and/or embodiments described herein though not directly placed in such a listing are also contemplated. Such related and/or like genera(s), sub-genera(s), specie(s), and/or embodiment(s) described herein are contemplated both in the form of an individual component that may be claimed, as well as a mixture and/or a combination that may be described in the claims as "at least one selected from," "a mixture thereof" and/or "a combination thereof."

As used herein, the term "and/or" means any one of the items, any combination of the items, or all of the items with which this term is associated.

As will be understood by the skilled artisan, all numbers, including those expressing quantities of ingredients, properties such as cavity/pore size and zeta potential, experimental conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

As used herein, the term "about" can refer to a variation of ±5% of the value specified. For example, "about 50" percent can in some embodiments carry a variation from 45 to 55 percent. For integer ranges, the term "about" can include one or two integers greater than and/or less than a recited integer. Unless indicated otherwise herein, the term "about" is intended to include values, e.g., concentration values, proximate to the recited range that are equivalent in terms of the functionality of the individual ingredient, the composition, or the embodiment.

As will be understood by one skilled in the art, for any and all purposes, particularly in terms of providing a written description, all ranges recited herein also encompass any and all possible subranges and combinations of subranges thereof, as well as the individual values making up the range, particularly integer values. A recited range includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

## DETAILED DESCRIPTION OF CERTAIN PREFERRED EMBODIMENTS OF THE INVENTION

The system and process in accordance with the present invention overcomes one or more of the above-discussed problems commonly associated with conventional membrane technology and processes. Specifically, the system of the present invention uses a reverse electro-osmotic filtration system. This and other unique features of the system are discussed below and illustrated in the accompanying drawings.

It should be understood that various components, parts, and features of the different embodiments may be combined together and/or interchanged with one another, all of which are within the scope of the present invention, even though not all variations and particular embodiments are shown in the drawings. It should also be understood that the mixing and matching of features, elements, and/or functions between various embodiments is expressly contemplated herein so that one of ordinary skill in the art would appreciate from this invention that the features, elements, and/or functions of one embodiment may be incorporated into another embodiment as appropriate, unless otherwise described.

A first object of the invention is a process for purifying an electrolyte solution, comprising the following steps:

> i) Contacting a first volume V1 of a first electrolyte solution 11A comprising a solute and a solvent with a first porous electrode 20A;
> ii) Contacting a second volume V2 of a second electrolyte solution 11B comprising a solvent with a second porous electrode 20B;
> iii) Applying an alternating electric field between the first and second electrodes 20A and 20B resulting in solvent transfer and solute filtration through a membrane element 30, the variation of volume V2 ($V_2(nT)$) being defined with the following formula (formula I) :

$$V_2(nT) = \mu_{EOeff}\, \Delta V_{eff}\, \pi\, r^2 n\, T L^{-1}$$

wherein T is the period of the applied signal (s), n the number of completed cycles, $\mu_{EOeff}$ is the effective electro-osmotic mobility ($m^2.V^{-1}.s^{-1}$), $\Delta V_{eff}$ is the local potential difference at the membrane (V), $r$ is the average radius of the pore of the membrane (m); and L is the membrane thickness (m);

iv) Evacuating bubbles generated during parasitic electrochemical reactions wherein,

> the first electrode 20A and the second electrode 20B are separated by an asymmetric membrane element 30 comprising a first side 30A and a second side 30B;
> the second side 30B of the asymmetric membrane element 30 has an average pore size 1.1 to 10 000 times smaller than that of the first side 30A;
> a separator 60 is positioned between the electrode 20A or 20B and the second side 30B of the asymmetric membrane element 30;
> the asymmetry between the first and second sides of the membrane element 30 is geometric, physico-chemical, environmental nature, or a combination thereof; and
> the first and second electrodes 20A and 20B being operatively coupled via two current collectors 70A and 70 B to an electrical power source 40.

A second object of the invention is a system for purifying an electrolyte solution comprising:

- a first vessel 40A comprising a first volume V1 of a first electrolytic solution 11A comprising a solute and a solvent;
- a second vessel 40B comprising a second volume V2 of a second electrolyte solution 11B comprising a solvent;
- a first electrode 20A in contact with the first electrolyte solution 11A;
- a second electrode 20B in contact with the second electrolyte solution 11B;
- an asymmetric membrane element 30 comprising a first side 30A, a second side 30B;
- a separator 60 positioned between the electrode 20A or 20B and the second side 30B of the asymmetric membrane element 30; and
- two current collectors 70A and 70B operatively coupling the first and second electrodes 20A and 20B to an electrical power source 40; wherein,
- the first and the second vessels 40A and 40B are configured to evacuating bubbles generated during parasitic electrochemical reactions by the Venturi effect;

- the first and the second electrodes 20A and 20B are porous electrodes, grid electrode or any geometry wherein the electrolyte can diffuse through it;
- the asymmetric membrane element 30 having an asymmetry of a geometric, physico-chemical, environmental nature, or a combination thereof between the first and second sides of the membrane element 30;
- the second side 30B of the asymmetric membrane element 30 has an average pore size 1.1 to 10 000 times smaller than that of the first side 30A.

Advantageously, the first and second electrodes 20A and 20B may be operatively coupled to a source of electrical power 40 via two current collectors 70A and 70B, so that an alternating electric field may be applied between the first and second electrodes 20A and 20B (e.g., the electric energy source 40 allows to apply an alternating electric field between the first and second electrodes 20A and 20B). As used herein, the term "solute" refers to a liquid or solid material that dissolves in the solvent used in electrolyte solutions 11A and/or 11B. Solid solutes may be selected from solid particles, organic or inorganic small molecules such as dye complexes (e.g., Tris(2,2'-bipyridyl)dichlororuthenium (II) hexahydrate), biomolecules such as hormones (e.g., testosterone), proteins, polysaccharides, polynucleotides, polypeptides, enzymes or antibodies, per- and polyfluoroalkyl substances (such as wastewater, industrial production waters, or landfill leachates), metabolic waste products, or salts/ions (such as NaCl, LiCl, Na2SO4). Liquid solutes may be organic acids (e.g., acetic acid, propionic acid, butyric acid, lactic acid, succinic acid, boric acid and the like), alcohols (e.g., ethanol, butanol and the like), or hexanes.

As used herein, the term "VIRO" refers to "Voltage Induced Reverse Osmosis".

As used herein, the term "membrane element", as in the conventional meaning of the term in the field of filtration membranes, refers to a membrane that will allow certain molecules or ions to pass through it by diffusion, osmose or man-made generated flux. For example, it may be a size exclusion membrane, an ion exchange membrane, or any other membrane allowing the separation/filtration of particular molecules or ions from a given electrolyte solution.

As used herein, the term "electrolyte solution" refers to an electrically conducting solution containing mobile ions, such as ions derived from dissolved salts as NaCl, KCl, $CaCl_2$ or $MgCl_2$, which induces electroosmose.

As used herein, "zeta potential" when referring to membrane surface charge does not deviate from the conventional meaning of the term in electrochemistry and refers to the potential difference between the membrane surface and the stationary layer of fluid attached to the membrane surface. The zeta potential typically depends on the nature of the membrane surface, and characteristics of the electrolyte solution that is in contact with the membrane surface (e.g., pH, ion concentration, ionic force, ...). The zeta potential may be calculated using the Smoluchowski equation (cf. Equ. 1 infra).

As used herein, "|zeta potential|" refers to the absolute value of the zeta potential (i.e., the numerical value of the zeta potential without regard to its sign). As will readily be understood from the present invention, the invention may be carried out using charged sub-membrane elements bearing a negative or positive surface charge: the zeta potential may be negative or positive, respectively, once the membrane is put into contact with an electrolyte solution.

The asymmetric membrane element 30 may comprise a composite material with different properties of each element of the composite, an assembly of two materials of the same nature with at least one intrinsic property that differs, or a single material with at least one intrinsic property that differs from one side to the other. Advantageously, the second side 30B of the asymmetric membrane element 30 may have an average pore size 1.1 to 10 000 times smaller than that of the first side 30A, preferably 100 to 5 000 times smaller and more preferably 500 to 2000 times smaller.

The permeate, from which the excluded solutes have been removed, will exit the asymmetric membrane element 30 as the permeate stream and may be collected in vessel 40B.

In one variant, the second side (30B) of the asymmetric membrane element (30) is in contact with the second electrolytic solution 11B comprising a solvent.

In a second variant, the second side (30B) of the asymmetric membrane element (30) is in contact with the first electrolytic solution 11A comprising a solvent. Advantageously, the orientation of the membrane may be determined so that the variation of volume V2 ($V_2(nT)$) may be defined with the following formula (formula I):

$$V_2(nT) = \mu_{EOeff}\, \Delta V_{eff}\, \pi\, r^2 n\, TL^{-1}$$

and the variation of volume V1 ($V_1(nT)$) may be defined with the following formula (formula II):

$$V_1(nT) = -\mu_{EOeff}\, \Delta V_{eff}\, \pi\, r^2 n\, TL^{-1}$$

wherein T is the period of the applied signal (s), n the number of completed cycles, $\mu_{EOeff}$ is the effective electro-osmotic mobility ($m^2.V^{-1}.s^{-1}$), $\Delta V_{eff}$ is the local potential difference at the membrane (V), $r$ is the average radius of the pore of the membrane (m); and L is the membrane thickness (m);

In both formulas, $\mu_{EOeff}$ and $\Delta V_{eff}$ are strictly positive and frequency dependent. Moreover, $r$ may be calculated on the average value of the overall pore radius. The person skilled in the art will know how to adapt the orientation of the asymmetric membrane according to the type of asymmetry of the membrane depending on the result of the above calculation of V2(nT) or V1 (nT).

## 1. Composite asymmetric membrane

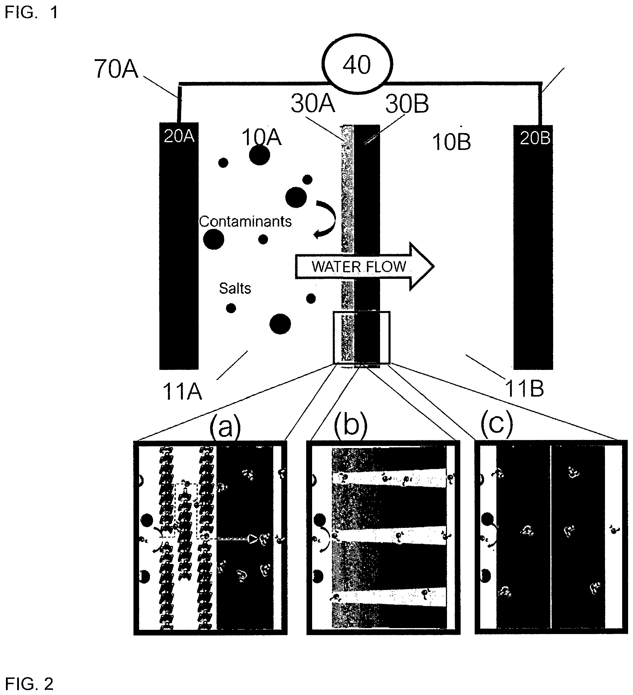

An exemplary embodiment is illustrated in FIG. 1.a.

In a variant, the first side 30A of the asymmetric membrane element 30 comprises a semipermeable sub-membrane and the second side 30B of the asymmetric membrane element 30 comprises a charged sub-membrane.

### 1.1. Semipermeable sub-membrane

Semipermeable sub-membranes useable in the context of the present invention may be any semipermeable sub-membrane known in the art.

Advantageously, the semipermeable sub-membrane element 30A may be a size exclusion membrane, an ion exchange membrane, or any other membrane allowing the separation/filtration of particular molecules or ions from a given electrolyte solution (for example semipermeable sub-membranes based on separation by chemical affinity), advantageously a size exclusion membrane or ion exchange membrane. For example, it may be a semipermeable sub-membrane which separates pure water molecules from salts and other impurities: a membrane that have permeability to water and relative impermeability to various dissolved impurities including dissolved salts, organics, bacteria, and pyrogens and other small molecules. As such, it may be a semipermeable sub-membrane conventionally used in water purification technology that uses a semipermeable sub-membrane to remove ions, molecules, and larger particles from contaminated water. It may be a semipermeable sub-membrane for use in water purification or desalination systems, in reverse osmosis systems, such as thin film composite membranes (TFC or TFM). Membranes used in reverse osmosis are, in general, made out of polyamide, chosen primarily for its permeability to water and relative impermeability to various dissolved impurities including salt ions and other small molecules that cannot be filtered. In yet another example, the semipermeable sub-membrane element 30A may be an anion exchange membrane (AEM) or a cation exchange membrane CEM). For example, the semipermeable sub-membrane element 30A may be a Nafion semipermeable sub-membrane.

The average pore size of the semipermeable sub-membrane will be adapted to filter out a target solute from electrolyte solution 11A. As such, the membrane average pore size will be small enough to prevent the target solute (and any other solute with a particle size greater than the target solute) from passing through the semipermeable sub-membrane 30A, while letting the solvent and other smaller sized solutes to pass through the semipermeable sub-membrane 30A. The average pore size of the semipermeable sub-membrane will be adapted depending on the intended application type: microfiltration (50-500 nm), ultrafiltration (1-50 nm), or nano-filtration ($\leq$1 nm). Advantageously, the semipermeable sub-membrane element 30A may have an average pore size < 500 nm, preferably < 300 nm, more preferably < 100 nm, most preferably < 50 nm. In a preferred variant, the filtration system is intended for ultrafiltration, and the semipermeable sub-membrane element 30A may have an average pore size between 1-50 nm. In another preferred variant, the filtration system is intended for nano-filtration, and the semipermeable sub-membrane element 30A may have an average pore size < 1 nm. Such nano-filtration systems may be useful for example for desalination. Advantageously, the semipermeable sub-membrane comprises a steric exclusion separation membrane, an electrostatic exclusion separation membrane or a membrane capable of separating/filtering particular solid molecules or ions from a given electrolyte solution. More advantageously, the semipermeable sub-membrane comprises a material selected from $TiO_2$, boron nitride, $SiO_2$, polyethersulfone, polycarbonate, anodic aluminium oxide, hydrotalcite, Ni-Fe layered double hydroxide, $Ni_2$dobdc, $Mg_2$dobdc (dobdc = 1,4-dioxido-2,5-benzenedicarboxylate), cellulose, polyamide, composite membranes such as thin film composite (TFC), PTFE, polymeric membrane of polyelectrolyte layers, metal chalcogenides such as WS2, MoS2, WSe2 or GaSe, semimetals (e.g. WTa2, TcS2), metal organic framework membranes (MOF), MXene, biomimetic membranes (such as aquaporins), any liquid membrane, carbon materials such as graphene oxide, graphene or graphite, superconductors (e.g. $NbS_2$, $TaSe_2$), topological insulators and thermoelectric materials (e.g. $Bi_2Se_3$, Bi2Te) or the semipermeable sub-membrane is an organic or inorganic filtration membranes, preferably a nanofiltration, ultrafiltration or reverse osmosis membranes

All these materials can show similar properties of selective permeability and may be used as molecular sieves in applications involving membrane separation, such as nanofiltration, desalination, etc.

Carbon nanotube membranes (carbon material) consist of two pierced graphene sheets connected by short carbon nanotubes of defined diameter. Their practical application is however limited due to the complexity of their manufacture. Nanoporous graphene membranes consist of a single sheet of graphene with nanopores of defined size. However, it is still difficult to obtain large graphene sheets with a pre-defined pore size and a high pore density. Graphene oxide (GO) membranes are composed of stacked GO nanosheets separated by interconnected nanochannels which form the pores allowing selective permeation through the membrane. They can be produced relatively easily and cheaply by depositing GO solutions onto various supports by spraying, dip coating, spin coating, vacuum filtration, etc., and are currently the most commonly used. Further, GO sheets can converted to graphene-like reduced GO (rGO) sheets, with electrical, thermal, mechanical, and surface properties similar to those of pristine graphene.

Accordingly, in the context of the present invention, the semipermeable sub-membrane may be a carbon nanotube membrane, a nanoporous graphene membrane, or a multilayer GO or rGO membrane, preferably a multilayer GO or rGO membrane, most preferably a multilayer GO membrane.

Advantageously, the semipermeable sub-membrane 30A may be a size exclusion selective membrane composed of stacked graphene oxide flakes. Advantageously, the stacked graphene oxide flakes may form a network of 2D nano-channels with an interlayer spacing between GO flakes ranging from 0.7 - 1.4 nm. Interlayer spacing between stacked graphene oxide flakes may be measured by any suitable process known in the art. For example, it may be measured using XRD. Advantageously, the nanoporous carbon membrane pore size may range from 0.7 nm to 1.5 nm, preferably $\leq 1.4$ nm, more preferably $\leq 1.3$ nm, still more preferably $\leq 1.1$ nm, and even more preferably $\leq 1.0$ nm. The "pore size" when referring to carbonaceous semipermeable sub-membrane, refers to the pore diameter in the case of carbon nanotubes and nanoporous graphene membranes, and to the width of the inter-layer gaps in the case of multilayer GO or rGO membranes. Typically, the nanoporous carbon membrane may be from 0.05 $\mu$m to 1 $\mu$m thick, preferably of from 100 to 500 nm thick, in the case of a carbon nanotube membrane. In the case of a multilayer GO or rGO membrane, the carbon membrane may comprise at least 2, preferably at least 3, and up to 300 layers of GO or rGO sheets, and may be from 0.05 to 20 $\mu$m thick, for example from 0.05 to 15 $\mu$m thick, from 0.05 to 10 $\mu$m thick, from 0.05 to 5 $\mu$m thick, or from 0.05 to 1 $\mu$m thick. For example, the carbon membrane may be about 0.1 $\mu$m thick.

In another variant, the semipermeable sub-membrane 30A may be a stacked membrane of a lamellar material. Any lamellar material may be used. For example, MoS2, hexagonal NiB, clay, graphitic systems.

For example, the semipermeable sub-membrane 30A may be a multilayer MoS2 membrane, a multilayer hexagonal NiB membrane or a multilayer GO or rGO membrane, preferably a multilayer GO or rGO membrane, most preferably a multilayer GO membrane.

In another exemplary variant, the semipermeable sub-membrane 30A may be an ion exchange membrane, such as anion-exchange membranes (e.g., OH-, Cl-transport) or cation-exchange membranes (e.g., H+, Na+, K+ transport).

The semipermeable sub-membrane may be placed directly on the charged sub-membrane element 30B. This may be achieved for example by vacuum filtration, preferably in wet conditions (from dispersions in water or an aqueous solvent). For example, a dispersion of carbonaceous material (e.g., carbon nanotube, graphene, GO or rGO) or lamellar material (e.g., MoS2, hexagonal NiB, clay, MXene, MOF graphitic systems) in water may be added dropwise under vacumm on top of the charged sub-membrane 30B. For example, the charged sub-membrane 30B may be disposed on a Büchner funnel connected to a vacuum pump, and the dispersion of carbonaceous material or lamellar material in water may be slowly added (e.g., dropwise) on the charged sub-membrane 30B, to form a staked membrane of carbonaceous material or lamellar material (the semipermeable sub-membrane element).

Advantageously, the semipermeable sub-membrane may be preferably adapted to achieve solute rejection of 98.0% or more, preferably $\geq 98.5\%$, more preferably $\geq 99.0\%$, still more preferably $\geq 99.5\%$, most preferably 100% or about 100% solute rejection.

The person skilled in the art will know how to adapt the semipermeable sub-membrane average pore size to the context of its use, according to the size of the solute which it must filter.

### 1.2. Charged sub-membrane

Charged sub-membranes useable in the context of the present invention may be any charged membrane known in the art.

Advantageously, the charged sub-membrane comprises a material capable of generating electroosmotic flow or separating/filtering particular molecules or ions from a given electrolyte solution. More advantageously, the charged sub-membrane comprises a surface charge with a zeta potential greater than or equal to 5 mV, preferably greater than or equal to 20 mV, even more preferably greater than or equal to 50 mV.

In a variant, the charged sub-membrane may be a sub-membrane wherein at least part of the inner surface of the nanochannel(s) of the membrane is essentially formed of at least one material having a suitable surface charge. As used in the present invention, unless otherwise indicated, the term "essentially formed" of a material means "made of" a material. The term also encompasses the possibility that the material be optionally physically or chemically modified (e.g. on the surface and/or on the pore wall surface) to modulate its physicochemical properties to fit the intended use. The chemical modifications can include doping (adding metallic elements for example on the surface or in the core of the material network); coating (e.g., with a thin layer of a material having a suitable surface charge); covalent functionalization; physiosorption or chemisorption of compounds/species for example by chemical vapor deposition, atomic layer deposition, sol-gel coating or dip-coating or electrochemical deposition; or ionization of ionizable functional groups at the surface of the material by pH change.

In one preferred embodiment, at least part of the inner surface of the nanochannels is essentially formed of or coated with at least one material having a suitable surface charge.

Advantageously, the nanochannels may preferably be entirely formed of or coated with at least one material having a suitable surface charge.

As used herein, "at least part of the inner surface of the nanochannels" refers to the fact that the inner surface of the nanochannels may comprise one or more sections essentially formed of a material having a suitable surface charge, or that the entirety of the inner surface is essentially formed of at least one material having a suitable surface charge. Said section(s) may be regular or irregular, intermittent or non-intermittent and/or in the form of a single layer or multi-layers. Preferably, the total inner surface of the nanochannels is essentially formed of at least one material having a suitable surface charge.

Charged sub-membranes useable in the context of the present invention may have a positive or negative surface charge.

When the charged sub-membrane carries a positive surface charge, the application of an alternating electric field between electrodes 20A and 20B, where electrode 20B, in contact with the electrolyte solution 11B of the second vessel 10B is positively charged, will induce the flow of anions in the electrolyte solution 11B from the positively charged pore surface of the charged sub-membrane element 30B towards electrode 20B. This anion flow concomitantly induces the flow of the solvent from the first vessel 10A towards the second vessel 10B, through the asymmetric membrane element 30.

Conversely, when the charged sub-membrane carries a negative surface charge, the application of an alternating electric field between electrodes 20A and 20B, where electrode 20B, in contact with the electrolyte solution 11B of the second vessel 10B is negatively charged, will induce the flow of cations in the electrolyte solution 11B from the negatively charged pore surface of the charged sub-membrane element 30B towards electrode 20B. This cation flow concomitantly induces the flow of the solvent from the first vessel 10A towards the second vessel 10B, through the asymmetric element 30.

Examples of materials bearing a surface charge suitable for the charged sub-membrane element according to the present invention include titanium oxide, boron nitride, $SiO_2$, polyethersulfone, polycarbonate, nylon, polyamide, composite membranes such as thin film composite (TFC), anodic aluminum oxide (anodic alumina), hydrotalcite, polymeric membrane of polyelectrolyte layers, any organic separator such as porous PVC, PTFE, metal chalcogenides such as WS2, MoS2, WSe2 or GaSe, semimetals (e.g. WTa2, TcS2), any liquid membrane, any biomimetic membranes (such as aquaporins), carbon materials such as graphene oxide, graphene or graphite, Ni-Fe layered double hydroxide, $Ni_2$dobdc, $Mg_2$dobdc (dobdc = 1,4-dioxido-2,5-benzenedicarboxylate), cellulose or polyelectrolyte layers polymer membranes such as charged sub-membranes obtained by sequentially dip-coating layers of cationic polyethyleneimine and anionic poly(acrylic acid) onto polycarbonate membranes. $Ni_2$dobdc and $Mg_2$dobdc are known metal organic frameworks with dobdc ligands, and Ni or Mg metal sites, respectively. Advantageously, materials bearing a surface charge suitable for the charged sub-membrane element according to the present invention include materials essentially formed of titanium oxide, boron nitride, $SiO_2$, polyethersulfone, polycarbonate, anodic aluminum oxide; preferably titanium oxide, boron nitride, $SiO_2$, polycarbonate, and anodic aluminum oxide; most preferably titanium oxide, polycarbonate, and anodic aluminum oxide.

By titanium oxide is meant any type of titanium oxide, for example titanium (IV) oxide or titanium dioxide, and mixtures of two or more thereof. These titanium oxides may be in different solid polymorphous forms, in particular in amorphous form or in crystalline form. In respect of titanium dioxide ($TiO_2$), the rutile or anatase crystalline form type is chiefly used, preferably the anatase form.

As used herein, "essentially formed of titanium oxide, boron nitride, etc..", refers to a material formed of titanium oxide, boron nitride, etc., which may include minority element(s) such as impurities.

The physicochemical properties of materials such as titanium oxide, boron nitride, anodic aluminium oxide, $SiO_2$, can generally be modulated and amplified by doping or functionalisation i.e. by inserting metallic chemical elements on the surface or in the core of the material network, such as iron, silver, vanadium, gold, platinum, niobium, tungsten, or non-metallic elements such as nitrogen, sulfur, carbon, hydrogen, boron, phosphorus, or different chemical compounds of the silane, amine or other organic families, preferably in small amounts.

For example, the charged sub-membrane material may be titanium oxide, which may be doped on the surface or in the core of its crystalline network by inserting metallic chemical elements such as iron, silver, vanadium, gold, platinum, niobium, tungsten, or non-metallic elements such as nitrogen, sulfur, carbon, hydrogen, boron, phosphorus, or different chemical compounds such as silanes or amines, preferably in an amount of between 0.5 and 10 weight % and more preferably between 1 and 5 weight %.

Charged sub-membranes useable in the context of the present invention may be carried by a nanoporous or pierced mechanical substrate on which at least one material having a suitable surface charge is deposited. For example, said charged sub-membranes may be composed of a flexible polymer membrane on which a layer of at least one material having a suitable surface charge, such as $TiO_2$, is deposited.

A membrane comprising nanochannels having an inner surface essentially formed of or coated with at least one material having a suitable surface charge, such as ceramic membranes (e.g., titanium oxide, anodic aluminium oxide, $SiO_2$) can be obtained directly by anodizing metallic foil (e.g., Ti, Al or Si) **[9]**. Other techniques such as sol-gel techniques in the presence of block copolymers or grafted copolymers also allow the synthesis of ceramic membranes, such as TiO$_2$ membranes, with regular, oriented nanochannels **[10]**. With this process, it is also possible to modulate the morphological parameters, length, width and asymmetry of through nanochannels. In addition, powder and sintering technology can be used to obtain very thin ceramic membranes, such as titanium oxide membranes having regular, controlled through nanochannels. Said membranes can also be obtained with different deposition techniques via CVD (Chemical Vapour Deposition), ALD (Atomic Layer Deposition) or HiPIMS (High Power Impulse Magnetron Sputtering), e.g. on nanoporous substrates having preformed morphology.

Alternatively, the surface of the negatively or positively charged material may be chemically modified to enhance the negative or positive charge, respectively, naturally present on the material after it is put into contact with an electrolyte solution, at a given pH. In other words, the surface of the charged sub-membrane 30B may be chemically modified to enhance the sub-membrane surface charge. The chemical modification may be affected by chemical vapor deposition, atomic layer deposition, sol-gel coating or dip-coating. Advantageously, the chemical modification may be affected on the surface of the charged sub-membrane pore walls. For example, the charged sub-membrane 30B may be obtained from a polycarbonate membrane having an average pore size < 500 nm, preferably < 300 nm, more preferably < 200 nm; the inner pore walls of which have been chemically modified by dip-coating the polycarbonate membrane in an aqueous solution of polydopamine. At pH=7, polycarbonate bears a negative surface charge, which is enhanced when the polycarbonate surface is coated with polyamine.

In another alternative, when the surface of the membrane material carries ionizable functional groups, the surface charge of the membrane may be modulated using pH. For example, for membrane materials such as TiO$_2$, SiO$_2$, Al$_2$O$_3$ bearing -OH groups at the surface, driving the pH of the electrolyte solution in contact with the membrane to basic values (pH = 8-14) will deprotonate the -OH groups, thereby enhancing the negatively charged surface. Variations in pH may thus be used to modulate/control the zeta potential at the membrane surface. In fact, depending on the pH of the electrolyte solution with which a charged sub-membrane element 30B is in contact, the surface charge of the same membrane can be positive or negative. For example, a charged sub-membrane element 30B essentially formed of TiO$_2$ car bear a <u>negative</u> surface charge at pH $\geq$9, and a <u>positive</u> surface charge at pH $\leq$ 6.

Without wishing to be bound by any particular theory, it is proposed that the nanochannels of material bearing a negative surface charge, having regard to their type, size and physicochemical properties, in particular their surface charge density in the order of:

Titanium dioxide: ~ - 100 mC/m$^2$ (at pH $\geq$9)
Boron nitride: ~ - 1 C/m$^2$ (at pH $\geq$10)
Silicon dioxide: ~ - 10 mC/m$^2$ (at pH $\geq$ 6)
Polycarbonate: ~ - 10 mC/m$^2$ (at pH $\geq$ 5)

promote the passing of cations (i.e., ions having opposite charges to the material's surface charge) via an electroosmosis nanofluid phenomenon generated by the application of an alternating electric field. The flow of cations from the Debye layer at the interface of the negatively charged membrane surface, which is globally electrically charged since it contains anion and cation imbalance under the effect of the surface charges, induces in turn the flow of solvent in the same direction as the cation flow.

Besides the composite membranes are characterized by an ionic transport with larger current under one voltage sign (e.g. negative voltages) in respect with the opposite forcing (such as positive voltage). The asymmetry can be reversed by changing the orientation of the composite membrane respect with the ground electrode. The asymmetry in ionic transport is then translated to an asymmetry in the EO water transport leading to the generation of an asymmetric induced water flux. Thus, under the application of a suitable alternating electric field, a net solvent flow will occur through the asymmetric membrane element 30 from vessel 10A to vessel 10B. Since the asymmetric membrane element 30 comprises a semipermeable sub-membrane element 30A, which is selective for one or more particular solute(s) present in the electrolyte solution 11A, the flow of cations generated in the pores of the charged sub-membrane 30B induces the flow of the electrolyte solution 11A from vessel 10A to vessel 10B, while preventing the solute(s) from passing through (the solute(s) get filtered out and stay in vessel 10A). Conversely, it is proposed that the nanochannels of material bearing a positive surface charge, promote the passing of anions (i.e., ions having opposite charges to the material's surface charge) via an electroosmosis nanofluid phenomenon generated by the application of an alternating electric field.

In both cases (cation or anion flow), the flow of solvent is induced in the same direction as the cation/anion flow generated upon application of a suitable alternating electric field between first and second electrodes 20A and 20B.

The membrane surface charge may be measured using any suitable process known in the art. For example, the zeta potentials of the charged sub-membranes may be figured out using an electrokinetic analyser.

The following equation can be implemented to estimate the zeta potential values on the membrane's surface:

$$I_{stream} = -\left(\frac{\varepsilon\zeta}{\eta}\right) A_p \left(\frac{\Delta P}{L}\right) \quad \textbf{(Equ. 1)}$$

where:

ε is the dielectric permittivity of the solvent (e.g., water),
ζ is the zeta potential,
η is the viscosity of the solvent (e.g., water),
$A_p$ is the total cross section surface area of all the pores in the membrane exposed to the electrolyte solution,
$\Delta P$ is the pressure drop across the length L of the pores, and
$I_{stream}$ is the electric streaming current.

The length of the pores L may correspond to the thickness of the charged sub-membrane, when charged sub-membranes with a porosity with low tortuosity are used (e.g., nanoporous anodic alumina which have most cylindrical pores). For charged sub-membranes having pores of significant tortuosity, calculations of permeability relative to the applied pressure allows to determine the total pore length by applying a relevant tortuosity factor.

The zeta potential of the membrane surfaces can be measured at different pH values (acidic, neutral and basic conditions) by changing the pH of the electrolyte solution using appropriate concentrations of a suitable acid (e.g., HCl, ) or base (e.g., KOH, NaOH, etc.). Preferably, the acid/base will be selected for compatibility with the ions present in the electrolyte solution used in the process/system according to the invention. For example, when a KCl electrolyte solution is used, KOH may be used as base to adjust the pH.

For example, if one wants a minimum 5 mV of |zeta potential| at the membrane surface, a membrane material carrying a high surface charge may be selected, which allows to maintain a high zeta potential at the surface when the membrane is in contact with the electrolyte solution.

The charged sub-membrane element 30B preferably has an average pore size greater than that of the semipermeable sub-membrane element 30A: the solute filtering function is carried out by the semipermeable sub-membrane element 30A, while the function of the charged sub-membrane element 30B is to promote reverse osmotic flow of the solvent upon application of an appropriate alternating electric field between the first and the second electrodes 20A and 20B.

Advantageously, the charged sub-membrane element 30B bearing a positive or negative surface charge may have an average pore size < 500 nm, preferably < 300 nm, more preferably < 100 nm, most preferably < 50 nm. Preferably, in the context of the present invention, the mean diameter of the nanochannels of the charged sub-membrane element 30B may be between 1 and 500 nm, preferably between 1 and 300 nm, more preferably between 10 and 100 nm, most preferably between 10 and 50 nm.

As used herein, the term "mean diameter" refers to the inner mean diameter of a nanochannel. The nanochannel may have nanotubular, conical asymmetric, neck or perforated base morphology. If the nanochannel has nanotubular morphology i.e. of circular cross-section, the mean diameter corresponds to the inner diameter of the circular cross-section. If the nanochannel has conical asymmetric, neck or perforated base morphology, or an oval or irregular cross-section, the mean diameter corresponds to the mean of the smallest and largest inner diameter. The mean diameter of the nanochannels may be measured using means known to persons skilled in the art. For example, the mean diameter can be measured by scanning electron microscopy or transmission electron microscopy. Advantageously, the nanochannels contained in the charged sub-membrane element 30B may have homogeneous diameters. If, on one same membrane, the nanochannels do not all have homogeneous diameters, the mean diameter will correspond to the mean of the mean diameters of all the nanochannels. Advantageously, in the context of the present invention, the nanochannels have nanotubular, conical asymmetric, neck or perforated base morphology, preferably said nanochannels have conical asymmetric morphology.

The morphological parameters of the charged sub-membranes useable in the context of the invention may be assessed using conventional techniques, including scanning electron microscopy (SEM), atomic force microscopy (AFM), confocal scanning laser microscopy (CSLM) and transmission electron microscopy (TEM). Alternatively, or additionally, X-ray computed microtomography (micro-CT), nuclear magnetic resonance (NMR), spin-echo small-angle neutron scattering (SESANS) and/or magnetic small-angle neutron scattering (MSANS) may be used (these techniques are generally faster and more complete techniques, as they can give a 3D (volume) analysis). With these techniques, morphological parameters of the charged sub-membranes according to the invention may be assessed, such as pore size, pore size distribution, surface roughness, molecular weight cutoff and thickness.

Pore size represents the dimensions of the pores, which are channels of a variable cross-section. The distance between two opposite pore walls is used as the pore size for simple geometries (typically: diameter of cylindrical pores for pore size >2 nm, width of slit-shaped pores for pore size <2 nm). If the pores have irregular shapes, some averaging is made to report an average pore size. Processes for measuring pore size, average pore size, and pore size distribution of porous materials are well-known in the art (cf. ISO 15901 norm for example), including some statistical analysis using a model such as nonlinear optimization and Monte Carlo integration for materials where the pores do not all have the same size and/or geometry. Given the chemical and physical nature and the range of average pore size of the charged sub-membrane element 30B (preferably mean diameter of the nanochannels of the charged sub-membrane element 30B may be between 1 and 500 nm, preferably between 1 and 300 nm, more preferably between 10 and 100 nm, most preferably between 10 and 50 nm), according to ISO 15901 norm, average pore size may be measured by nitrogen gas adsorption at -196°C (liquid nitrogen temperature).

Charged sub-membranes useable in the context of the invention may have a not uniform pore size distribution across the membrane thickness or may have a uniform pore size distribution across the membrane thickness. Typically, for charged sub-membranes having a not uniform pore size distribution, a very thin dense surface layer is present acting as a functional layer on top of a porous sublayer with a specific pore diameter. A charged sub-membrane having a not uniform pore size distribution consists, for example, of a $0.1$-$1$-$\mu$m-thick skin layer (the selective barrier) on a highly porous $100$-$200$-$\mu$m-thick substructure. The pore size of the porous sublayer may be as low as $\leq 1$ nm and as high as $500$ nm, the pore size range defining the type of application for which the charged sub-membrane may be used: microfiltration (50-500 nm), ultrafiltration (1-50 nm), and nano-filtration ($\leq 1$ nm). The pore size and its distribution may be determined by numerical analysis of pore dimensions observed in electron micrographs of the membrane cross section. The aforementioned pore size numerical values represent the arithmetic mean of the distribution of pore sizes observed by scanning electron microscopy (SEM) over the membrane cross section. Advantageously, the mean cross-section of the charged sub-membrane nanochannels and their specific, regular through-morphology promote good diffusion of the solution through the membrane. Therefore, the charged sub-membrane element 30B sets itself clearly apart from the semipermeable sub-membrane element 30A, via its pores that potentially allow the circulation both of water molecules and of ions, since each of the pores advantageously has a cross-section larger than the size of these molecules.

Besides, the closest distance between the semipermeable sub-membrane 30A and the charged sub-membrane 30B will reduce the overall electrical resistance of the electro-osmotic diffusion and hence benefit to the process performances. Hence the semipermeable sub-membrane 30A is preferably superimposed with the charged sub-membrane 30B.

## 1.3. Exemplary features of composite membrane filtration systems

In exemplary embodiments, the process and the system according to the invention may use an asymmetric membrane comprising a particularly advantageous selection of semipermeable sub-membrane 30A, charged sub-membrane 30B bearing a surface charge with a | zeta potential| $\geq 5$ mV, and electrodes 20A and 20B.

The semipermeable sub-membrane 30A may be selected from nanoporous carbon membranes or stacked membranes of a lamellar material. The nanoporous carbon membranes or stacked membranes of a lamellar material may be as described previously. The nanoporous carbon membrane pore size may range from 0.7 nm to 1.5 nm, preferably $\leq 1.4$ nm, more preferably $\leq 1.3$ nm, still more preferably $\leq 1.1$ nm, and even more preferably $\leq 1.0$ nm. For example, the semipermeable sub-membrane may be a multilayer MoS2 or WS2 membrane, a multilayer hexagonal NiB or BN membrane or a multilayer GO or rGO membrane, preferably a multilayer GO or rGO membrane, most preferably a multilayer MoS2 membrane. Advantageously, the semipermeable sub-membrane 30A may be a size exclusion selective membrane composed of stacked graphene oxide flakes.

The charged sub-membrane 30B bearing a surface charge with a | zeta potential | $\geq 5$ mV made be made of titanium oxide, boron nitride, SiO2, polyethersulfone, polycarbonate, anodic aluminum oxide; preferably titanium oxide, boron nitride, SiO2, polycarbonate and anodic aluminum oxide; most preferably titanium oxide, polycarbonate, and anodic aluminum oxide.

The semipermeable sub-membrane 30A is preferably superimposed with the charged sub-membrane 30B. The semipermeable sub-membrane may be placed directly on the charged sub-membrane element 30B, or may be first placed on another porous support layer (33) (for ease of manufacture and/or handling, for example) before being placed on the charged sub-membrane element 30B, as previously described.

The first and second electrodes 20A and 20B may be any metal or carbon electrodes and can have a capacitive effect. Suitable metal electrodes include Zn, Fe, Pt, Ag or Au electrodes. Suitable carbon electrodes include carbon-paste electrodes, glassy carbon electrodes, graphite or graphitic carbon electrodes, or any carbon electrodes used in salt batteries. Advantageously, the first and second electrodes 20A and 20B may be platinum electrodes. Preferably, the first and second electrodes 20A and 20B may be carbon electrodes (the advantage being that it allows to operate the filtration system according to the present invention under a large range of voltages with showing limited catalysis of parasite electrochemical reactions (in the order of 0.1 V - 1 kV, preferably between 0.1 V - 100 V and more preferably between 1 V - 50 V).

## 2. Asymmetric membrane comprising one material

An exemplary embodiment is illustrated in FIG. 1.b.

In another variant, the asymmetric membrane element 30 may be a asymmetric membrane element comprising one material, wherein the semipermeable sub-membrane element 30A and the charged sub-membrane element 30B are one and the same element to form a single asymmetric membrane 30A. Advantageously, the asymmetric membrane comprising one material 30A may have a predetermined pore size and zeta potential, adapted to the target solute(s) to be concentrated/depleted or eliminated/filtered out. Advantageously, the asymmetric membrane comprising one material 30A may have an average pore size adapted to filter out a target solute from electrolyte solution 11A, and a surface charge on the asymmetric membrane comprising one material inner pore walls surface with a |zeta potential| $\geq$ 5 mV, preferably $\geq$ 20 mV, most preferably $\geq$ 50 mV.

For example, the average pore size of the asymmetric membrane comprising one material will be small enough to prevent the target solute (and any other solute with a particle size greater than the target solute) from passing through the asymmetric membrane comprising one material 30A, while letting the solvent and other smaller sized solutes to pass through the asymmetric membrane comprising one material 30A. The average pore size of the asymmetric membrane comprising one material 30A will be adapted depending on the intended application type: microfiltration (50-500 nm), ultrafiltration (1-50 nm), or nano-filtration ($\leq$1 nm). Advantageously, the asymmetric membrane comprising one material 30 may have a porosity (i.e., an average pore size as measured according to ISO 15901 norm) < 500 nm, preferably < 300 nm, more preferably < 100 nm, most preferably < 50 nm. In a preferred variant, the filtration system is intended for ultrafiltration, and the asymmetric membrane comprising one material 30A may have a porosity an average pore size between 1-50 nm.

The asymmetric membrane comprising one material element may be a charged sub-membrane having a suitable (positive or negative) surface charge, as described generally and in any variant above including preferred and advantageously variants, with an average pore size adapted to eliminate/filter out a target solute from electrolyte solution 11A, as described in the paragraph immediately above. The description part regarding the charged sub-membranes is not reproduced here for sake of conciseness, but it will be understood that it is applicable mutatis mutandis to the asymmetric membrane comprising one material element.

Advantageously, the asymmetric membrane comprising one material 30A may be a charged sub-membrane essentially formed of a material having a surface charge, positive or negative, with a | zeta potential | $\geq$ 5 mV, preferably $\geq$ 20 mV, most preferably $\geq$ 50 mV, such as $TiO_2$, boron nitride, $SiO_2$, polyethersulfone, polycarbonate, anodic aluminum oxide, hydrotalcite, Ni-Fe layered double hydroxide, $Ni_2$dobdc, $Mg_2$dobdc (dobdc = 1,4-dioxido-2,5-benzenedicarboxylate), cellulose or polyelectrolyte layers polymer membranes such as charged sub-membranes obtained by sequentially dip-coating layers of cationic polyethyleneimine and anionic poly(acrylic acid) onto polycarbonate membranes; preferably $TiO_2$, BN, $SiO_2$, polycarbonate, anodic alumina, hydrotalcite, Ni-Fe layered double hydroxide, $Ni_2$dobdc, $Mg_2$dobdc, cellulose or polyelectrolyte layers polymer membranes; most preferably $TiO_2$, BN, anodic alumina, $SiO_2$, or polycarbonate.

Advantageously, the asymmetric membrane comprising one material 30A may be a size exclusion selective membrane coated on its inner pore walls with a material having a surface charge, positive or negative, with a |zeta potential| $\geq$ 5 mV, preferably $\geq$ 20 mV, most preferably $\geq$ 50 mV, such as $TiO_2$, boron nitride, $SiO_2$, polyethersulfone, polycarbonate, anodic aluminum oxide, hydrotalcite, Ni-Fe layered double hydroxide, $Ni_2$dobdc, $Mg_2$dobdc (dobdc = 1,4-dioxido-2,5-benzenedicarboxylate), cellulose or polyelectrolyte layers polymer membranes such as charged sub-membranes obtained by sequentially dip-coating layers of cationic polyethyleneimine and anionic poly(acrylic acid) onto polycarbonate membranes; preferably $TiO_2$, BN, $SiO_2$, polycarbonate, anodic alumina, hydrotalcite, Ni-Fe layered double hydroxide, $Ni_2$dobdc, $Mg_2$dobdc, cellulose or polyelectrolyte layers polymer membranes; most preferably $TiO_2$, BN, anodic alumina, $SiO_2$, or polycarbonate.

3. Asymmetric membrane comprising two materials

An exemplary embodiment is illustrated in FIG. 1.c.

In another variant, the asymmetric membrane element 30 may be an asymmetric membrane element comprising two materials of the same nature, wherein at least one physical or/and one chemical parameter differs from one material to the other, Preferably, the asymmetric membrane comprising two materials may be a membrane comprising a first and a second side made of the same material wherein the pore size of each side is different.

For example, the asymmetric membrane comprising two materials may comprise a first side made of polycarbonate and having a pore size of 200nm with a second side made of polycarbonate having a pore size of 10 nm pores.

Vessels 10A and 10B

In the present invention, any asymmetric membrane element 30 that separates vessels 10A and 10B can be used without any particular limitation as long as it does not to allow a solute to permeate therethrough and mainly allows a solvent to permeate therethrough. Advantageously, the asymmetric membrane element 30 may be preferably adapted to achieve solute rejection of 98.0% or more, preferably $\geq$ 98.5%, more preferably $\geq$ 99.0%, still more preferably $\geq$ 99.5%, most preferably 100% or about 100% solute rejection.

For carrying out the process according to the present invention one may use a separation device/system comprising two vessels separated by the asymmetric membrane element 30. In this situation, the mixture to be separated is placed in a first vessel, (vessel 10A) and the extracted solvent is recovered in the second (vessel 10B).

In the present invention, the reverse electro-osmotic filtration/purification system may be performed in a batch or continuous manner in order to maximize its effect. Preferably, the reverse electro-osmotic filtration/purification system may be performed in a continuous manner.

Advantageously, the first and the second vessels may be configured to evacuating bubbles generated during parasitic electrochemical reactions by the Venturi effect, with an outlet pipe 402A (FIG. 7).

Preferably, the first and/or second vessels may comprise an outlet pipe or an outlet pipe may be connected on the first and/or second vessels. Preferably, the outlet pipe may be made up of the same material as the vessel. Preferably, the outlet pipe may have a circular, square or oval shape.

Preferably, the first and/or second vessel may comprise walls 401 and an outlet pipe 402 A subdivided in two parts; a pipe sub-vessel 402A and an hyperbolic sub-vessel 402B wherein the pipe diameter is w, the larger opening of the hyperbolic sub-vessel has a dimension y, the narrower opening of the hyperbolic sub-vessel has a dimension x and the height of the hyperbolic sub-vessel has a dimension z. Preferably, the width of the outlet pipe w is 0.1 to 1000 times larger than the outlet width of the vessel x, more preferably 0.5 to 10 times and even more preferably 0.3 to 3 times.

Preferably, the outlet width of the vessel x is 0.1 to 1 times larger than the width of the vessel y, when measured at the bottom of the vessel height, more preferably 0.2 to 1 times and even more preferably 0.5 to 1 times.

Preferably, the height of the vessel z is 0.1 to 5 times larger than the width of the vessel y, when measured at the bottom of the vessel height, more preferably 0.2 to 5 times and even more preferably 0.5 to 2 times.

More advantageously, the first and second vessels 40A and 40B have a geometry that allows compression of the first and second electrodes.

For example, the reverse electro-osmotic filtration/purification system according to the present invention may be configured in plural numbers. In other words, the unit "vessel 10A-asymmetric membrane element 30-vessel 10B" may be configured in multiple stages.

In one exemplary variant, provision could be made so that the reverse electro-osmotic filtration/purification system comprise N vessels (10) and N-1 asymmetric membrane elements 30, N being an integer. For example, N may range between 3 and 100, more particularly between 3 and 50. In this multi-vessel device, the vessels and asymmetric membrane elements may be such as defined above. The assembly may therefore be formed of alternating vessels (10) alternately containing an electrolyte solution concentrated in a solute of interest and a lesser concentrated electrolyte solution, separated from one another by asymmetric membrane elements 30. The expression "concentrated in a solute", mentions above, means that the feed electrolyte solution contains a higher concentration of solute than the eluent electrolyte solution.

Solvent

Advantageously, the solvent of the first electrolyte solution 11A and the solvent of the second electrolyte solution 11B may be identical or different.

Advantageously, the solvent of the first electrolytic solution 11A and the solvent of the second electrolytic solution 11B are independently selected from polar solvents or apolar solvents. Preferably, the solvent of the first electrolytic solution 11A and the solvent of the second electrolytic solution 11B are independently selected from water, one or more organic solvents or a mixture thereof.

As used herein, the term "polar solvent" does not deviate from the conventional meaning and from common knowledge/usage in the field. In general, polar solvents include without limitation aprotic solvents having a dielectric constant $\geq 6$ and a dipole moment $\geq 1.50$ D, and protic solvents.

Preferably, the polar solvent may advantageously be a solvent capable of generating acidic ions. For example, the polar solvent may be water, an alcohol such as methanol or ethanol, a hydroalcoholic mixture, formic acid, acetic acid, hydrogen fluoride, ammonia, acetone, or acetonitrile.

For example, apolar solvent may be hexane, pentane, cyclohexane, cyclopentane, toluene, 1,4-Dioxane or benzene.

Electrolyte solutions 11A and 11B and solutes

Electrolyte solutions useable in the context of the present invention may be any electrolyte solutions containing at least one solute of interest/undesired solute, in a solvent as defined above.

In a preferred variant, the electrolyte solutions may be aqueous solutions comprising electrolytes. The electrolytes may be of any chemical type insofar as they are dissolved in the solution in the form of charged ions. Preferably, these ions derive from dissolved salts such as NaCl, KCl, $CaCl_2$ and $MgCl_2$. The electrolyte solutions may be synthetic solutions; natural solutions such as fresh water from lakes or rivers, underground waters, brackish waters, seawater, industrial production waters, oil production waters or biological solutions/fluids.

Examples of solute-containing aqueous solutions to be used as electrolyte solutions according to the present invention include seawater, brackish water, cellular metabolites, reaction products, biological fluids, etc., wherein the cellular metabolites are intended to include cultures of animal cells, plant cells or microorganisms, their primary metabolites, secondary metabolites, in vitro secreted proteins, biotransformations.

Examples of reaction solutions include chemical reaction products and enzymatic reaction products.

Examples of microorganism primary metabolites include organic acids (e.g., acetic acid, propionic acid, butyric acid, lactic acid, succinic acid and the like), alcohols (e.g., ethanol, butanol and the like), hexanes, amino acids (e.g., lysine, tryptophan and the like), vitamins, polysaccharides, and the like, but is not limited thereto. Examples of microorganism secondary metabolites include antibiotics (e.g., penicillin and the like), enzyme inhibitors, physiologically active substances (e.g., taxol and the like), and the like, and examples of the in vitro secreted proteins of the microorganisms include enzymes such as amylases, cellulases or the like, insulins, interferons, monoclonal antibodies, and the like. In addition, the biotransformations of the microorganisms are substances produced by using microorganism or enzymes and examples thereof include steroids and the like, but are not limited thereto.

Examples of biological fluids include blood, blood serum, blood plasma, urine, saliva, tears, dialysis fluids, intestinal contents, parenteral nutrition solutions, seminal plasma, and cerebrospinal fluid.

Preferably, said electrolyte solutions may be aqueous solutions comprising a solute selected from among alkaline halides or alkaline-earth halides, preferably selected from among NaCl, KCl, $CaCl_2$ and $MgCl_2$, more preferably the solute is NaCl. The solute may be selected from solid particles, organic or inorganic small molecules such as dye complexes (e.g., Tris(2,2'-bipyridyl)dichlororuthenium (II) hexahydrate), biomolecules such as hormones (e.g., testosterone), proteins, polysaccharides, polynucleotides, polypeptides, enzymes or antibodies, pollutants (for example from wastewater, industrial production waters, or landfill leachates), metabolic waste products, or salts/ions. When the solute of interest to be concentrated is a solid, it is preferably a material which is easily crystallized depending on temperature and pH and which is not highly viscous even at high concentrations.

Advantageously, the solute is selected from the following solutes: ions as calcium ($Ca^{2+}$), magnesium ($Mg^{2+}$), sodium ($Na^+$), le potassium ($K^+$), carbonates ($CO_3^{2-}$), bicarbonates ($HCO_3^-$), les sulphates ($SO_4^{2-}$), chlorides ($Cl^-$), nitrates ($NO_3^-$) or phosphate [$PO_4$]$^{3-}$), solid objects as microplastics or any colloid or suspension, macromolecules or micropollutant in solution as hormones, pesticides antibiotic, dye, chemical compounds, nervous stimulants, steroids, Perfluoroalkyl and Polyfluoroalkyl Substances (PFAS) or a mixture thereof.

In the present invention, the solute may be salt (or liquid), and the solvent may be water. For example, the electrolyte solution 11A may be sea water, the solute is NaCl and the process is water desalination. As such, the present invention is also directed to a water desalination system comprising a reverse electro-osmotic filtration system according to the present invention, in any variant described herein. The present invention is also directed to a water purification system comprising a reverse electro-osmotic filtration system according to the present invention, in any variant described herein. For example, the water pollutant to be filtrated may include pharmaceutical drugs, endocrine disruptors, hormones, pesticides, and/or dyes.

More precisely, in one aspect, the invention is concerned with a process for purifying a liquid comprising water and impurities which implements electro-reverse osmosis technique.

By purifying water, water purification, it is generally meant any operation consisting in treating a water containing impurities at an initial content such that at the end of this operation, the final content of impurities is lower than the initial content. By impurity, it is meant any element, molecule, ion, or other, different from the elements constituting pure water, that is $H_2O$, OH-, and $H^+$. This purification process may be, for example, a process for desalinating for example sea water, a process for treating industrial production waters, or a process for treating landfill leachates. Accordingly, in one aspect, this patent application promotes a methodology for recovering potable water from vast sources of saline water, particularly surface water comprising sodium chloride of various concentrations. Applications range from less than 1% to 20% salinity, for example in the following salinity water application: brackish water of 0.5%-3.5% salinity, seawater of 3.5-4.5% salinity and brine water of 5%-20% salinity.

In the present invention, the solute-containing electrolyte solution may be a biological fluid, preferably dialysis fluids. As such, the present invention is also directed to an implantable artificial kidney comprising a reverse electro-osmotic filtration system according to the present invention, in any variant described herein. The underlying principle of the invention is that the asymmetric membrane element 30 (a single asymmetric membrane comprising one material), or at least part of it (composite membrane comprising a semipermeable sub-membrane element 30A and a charged sub-membrane element 30B), bears a sufficient surface charge (which may be positive of negative) to induce a zeta potential at the membrane/electrolyte solution interface, that is sufficiently high to induce the flow of anions or cations, respectively, through the nanochannels of the charged sub-membrane, upon application of a suitable alternating electric field between electrodes 20A and 20B. This phenomenon is governed by the same principles of zeta potential applied to colloidal particle suspensions.

In the case of colloidal suspensions, the fact that many organic and mineral colloidal particles possess a negative charge in aqueous environments causes them to repel one another and maintain the stable state of dispersion that characterizes them. Electrochemical dispersion of colloidal particles has been studied for many years. Several models, such as the double-layer and the DLVO theories, have been developed to explain the stability of colloids. The double-layer model predicts that when suspended particles exist in a liquid phase an inner, dense layer at the surface of each particle, consisting of ions in solution attracted by the charge of the particle, exhibits a charge of polarity opposite to the natural charge of the particle itself under the physical and chemical conditions of the suspension. An outer layer of opposite polarity, also consisting of ions in solution, is diffused within a given distance from the surface of the particle. The net potential between the two layers, normally referred to in the art as the zeta potential, produces a repulsion which counteracts van der Waals forces of attraction between the particles. If the outer layer is diffused over a sufficiently wide radius, thereby increasing the effect of the zeta potential, the particles are kept apart and will remain in stable suspension. If, on the other hand, the radius of diffusion of the outer layer is reduced to the point where the van der Waals forces prevail, the particles are attracted to form agglomerates which tend to separate from the liquid phase.

Extending this principle to the present invention: a dense layer at the surface of the inner pore walls of the charged sub-membrane, consisting of ions in the electrolyte solution attracted by the surface charge present at the surface of the inner pore walls of the charged sub-membrane, exhibits a charge of polarity opposite to the natural charge of the charged sub-membrane itself under the physical and chemical conditions of the electrolyte solution. An outer layer of opposite polarity, also consisting of ions in solution, is diffused within a given distance from the surface of the charged sub-membrane. The net potential between the two layers is referred to as the zeta potential. The zeta potential is the potential difference between the dense layer of Stern and the liquid. It therefore characterizes the distribution of electrical charges on the surface of the inner pore walls of the charged sub-membrane.

As such, the zeta potential depends on the ionic force of the electrolyte solution, and concentration in ions in solution, around the membrane surface.

To increase the zeta potential and improve the reverse osmotic flow generated on either side of the asymmetric membrane element, the pH of the electrolyte solutions 11A and 11B may be adjusted as a function of the isoelectric point of the inner surface of the nanochannels of the charged sub-membrane 30B (composite membrane element or asymmetric membrane element comprising two materials) or 30 (asymmetric membrane element comprising one material).

The effect of pH on the membranes surface charge may be studied by measuring the zeta potential of the charged sub-membrane samples at different pH of the electrolyte solution. The zeta potential of charged sub-membranes may be pushed towards negative values with the increase in the pH values of the electrolyte solution. For example, one mechanism by which pH increase drives the zeta potential towards negative values includes the deprotonation of species at the surface of the membrane inner pore walls (e.g., deprotonation of OH to O$^-$, for example on TiO$_2$ or SiO$_2$ membrane surface).

Advantageously, the pH of the first electrolyte solution 11A and the second electrolyte solution 11B may differ by more than 1 pH unit, and more preferably by up to 14 pH units.

For example, when the solution to purified is sea water (i.e. the solute is NaCl), the pH of the first electrolyte solution 11A and the second electrolyte solution 11B differs by 0 pH unit. For example, when the solution to purified is brackish water polluted with acid or basic compounds (i.e. the solute is H$^+$ or OH$^-$ ions), the pH of the first electrolyte solution 11A and the second electrolyte solution 11B differs by is 4 pH unit. For example, when the solution to purified is batteries electrolytes (i.e. the solute is lithium or sodium of potassium), the pH of the first electrolyte solution 11A and the second electrolyte solution 11B differs by 0.1 to 14 pH unit.

For example, when ceramic charged sub-membranes, such as TiO$_2$ or BN charged sub-membranes are used, to obtain a negative charge on the inner surface of the nanochannels, the pH of the solutions can be adjusted to a value of between (pHiso+1) and 14, more favorably between the values (pHiso+2) and 12. To obtain a positive charge on the inner surface of the nanochannels, the pH of the solutions can be adjusted to a value of between 0 and (pHiso-1) further favorably between 1 and (pHiso-2). The increase in the negative zeta potential values of charged sub-membranes along with the pH increase may occur due to the deprotonation of the functional groups on the membrane surface, for example.

As used herein, "pHiso" refers to the pH of the isoelectric point of the constituent material of the inner surface of the nanochannels. pHiso is measured using methods known to skilled persons, in particular with the potentiometric acid-base titration method.

Preferably, the temperature of the first electrolyte solution 11A and the second electrolyte solution differs by more than 1°C, more preferably by more than 10°C, and more preferably by more than 50°C.

When the solute-containing electrolyte solution is an aqueous solution, the aqueous solution may have a pH of 0 to 14, depending on the nature of the charged sub-membrane and the surface charge naturally present on it, and a temperature at which water is maintained in a liquid state, for example, 0 to 100°C, preferably 15 to 50°C, more preferably 20 to 40°C. The temperature may be higher or lower than the above temperature. For example, a mixture of other solute/solvent may have a temperature deviating from the above temperature.

Electrodes 20A and 20B

As discussed previously, each of the vessels 10A and 10B of the purification/filtration system according to the invention comprises an electrode (20A and 20B, respectively) arranged so that the electrode comes in contact with the electrolyte solution (11A and 11B, respectively).

Different types of electrodes may be used in the context of the present invention. Advantageously, porous electrodes, grid electrodes or any geometry wherein the electrolyte can diffuse through it may be used. More advantageously, the electrodes may contain cavities or pores within the range size ranging from 0.1 nm to 1 mm,

Advantageously, the first electrode 20A and the second electrode 20B are independently selected from capacitive electrodes or electrodes capable of maintaining an alternating electric field across a membrane.

More advantageously, all types of electrodes capable of collecting the flow of cations or anions (e.g, $Na^+$ or $Cl^-$ ions) may be used, preferably electrodes composed of silver and silver Chloride (Ag/AgCl), Carbon and Platinum (C/Pt-), Carbon (C-), Graphite or Iron complexes of the type $[Fe(CN)_6]^{4-}/[Fe(CN)_6]^{3-}$. The first and second electrodes 20A and 20B may be any metal or carbon electrodes and can have a capacitive effect. Suitable metal electrodes include Zn, Fe, Pt and Au electrodes. Suitable carbon electrodes include carbon-paste electrodes, glassy carbon electrodes, graphite or graphitic carbon electrodes, or any carbon electrodes used in salt batteries. Advantageously, the first and second electrodes 20A and 20B may be platinum electrodes. Advantageously, the first and second electrodes 20A and 20B may be carbon electrodes. The advantage of using carbon electrodes is that it allows to operate the filtration system according to the present invention under large range of voltages with showing limited catalysis of parasite electrochemical reactions (in the order of 0.1 V - 1 kV, preferably between 0.1 V - 100 V and more preferably between 1 V - 50 V).

The electrodes 20A and 20B can be partly or fully immersed in the electrolyte solutions (11A, 11B), respectively. Provision could also be made so that the electrodes 20A and/or 20B may be in the form of at least one portion of a wall of the vessels 10A and/or 10B. These electrodes 20A and 20B are both connected to a source of electrical energy 40 allowing the generation of an alternating electric field between both electrodes. These electrodes may be connected via mere cables to the source of electrical energy 40.

Source of electrical energy 40

In the system and process according to the invention, the source of electrical energy 40 may be any suitable source of electrical energy known in the art. Advantageously, the source of electrical energy is generated by a device delivering only DC voltages and coupled to a DC/AC converter or by a device delivering an alternating electrical signal.

For example, it may be a battery, an electrical generator, a mains source, a photovoltaic panel, any other source of electrical signal.

In the present invention, the purpose of the source of electrical energy 40 is to generate an alternating electric field between electrodes 20A and 20B.

Advantageously, the source of electrical energy 40 may comprise one or more batteries. As such, the reverse electro-osmotic filtration system according to the present invention may be a portable/mobile system. For example, the source of electrical energy 40 may be configured to be charged by means of light, wherein particularly the source of electrical energy comprises a solar cell or a photo diode. Advantageously, the source of electrical energy 40 may be configured to be charged by means of using the reverse electro-osmotic effect of pumping electrolyte solution through the asymmetric membrane element 30. To that effect, the source of electrical energy 40 may comprise a hydro turbine element operatively connected to the asymmetric membrane element 30.

Herein is defined a net electroosmotic flow $Q_{EO}$. $Q_{EO}$ may be calculated with the following formula (formula III) :

$$Q_{EO}(\omega) = \pi r^2 \left( \frac{D}{\omega} \right)^{1/2} \frac{\mu_{EO}}{L^2} \Delta V_m$$

where: D is the ionic diffusion coefficient ($m^2$/s), $\omega$ is the frequency (Hz), $r$ is the average radius of the pores of the membrane (m), $\mu_{EO}$ is the effective EO mobility, $\Delta V_m$ is the local electric field at membrane location (V), L is the membrane thickness (m). $r$ may be calculated on the average value of the overall pore radius.

The net electroosmotic flow is directed from the first electrolytic solution 11A to the second electrolytic solution 11B.

Advantageously, the alternating electric field has an amplitude of from 1 V to 1 kV, and a frequency of from 1 mHz to 1 GHz, preferably from 0.001 Hz to 500 Hz, preferably between 0.01 Hz to 5 Hz.

Separator 60

As used herein, the separator 60 may be independently organic, inorganic or insulating composite.

The separator 60 should have a much greater pore size, to allow the permeation of the flow of the solvent of the electrolyte solution 11A from vessel 10A to vessel 10B, through the asymmetric membrane element 30. As such, the separator 60, preferably may have a pore size at least X5, X10, or greater, than the pore size of the semipermeable sub-membrane element 30A, and a thickness of from 30 to 300 $\mu$m, more preferably of from 30 to 100 $\mu$m, preferably as thin as possible to reduce the distance between the electrodes and hence the resistance. The separator 60 may be made of a neutral (no surface charge) non-reactive polymeric material, for instance a fluoropolymer such as polyvinylidene fluoride (PVDF) or polytetrafluoroethylene (PTFE), or mixed cellulose ester or cellulose acetate, porous cellophane, nylon, or polyolefin film. The separator 60 can also be made of a porous ceramic material such as an alumina, or silica based porous ceramic, by way of non-limitative examples.

In some embodiment, the system may comprise a second separator 60 positioned between the electrode 20 A or 20B and the second side 30B of the asymmetric membrane element 30.

Preferably, the system comprises only one separator 60 to reduce the overall resistance of the cell by reducing to its maximum the distance between the first and the second electrodes 20A and 20B.

## Bubble

As used herein, "bubble" refers to a small sphere that rises to the surface of a liquid filled with air or gas comprising oxygen, hydrogen, chlorine, any other gas compound depending on the electrochemical reaction depending on the solvent or a mixture thereof.

## Current collectors 70A and 70B

As used herein, the current collectors 70A and 70B may be independently selected from electrically conductive materials such as silver chloride (Ag/AgCl), carbon and platinum (C/Pt$^-$), platinum/iridium (Pt/Ir), platinum (Pt), carbon (C$^-$), aluminum (Al), nickel (Ni) graphite ,stainless steel (Fe/C), iron complexes ($[Fe(CN)_6]^{4-}/[Fe(CN)_6]^{3-}$).

## Flow rate control (50)

The reverse electro-induced flow rate through the asymmetric membrane element according to the invention may be controlled using different parameters:

(i) Surface charge of the charged sub-membrane: the flow rate across the membrane element may be increased with membranes having a higher surface charge. The surface charge may be adjusted with the choice of the material, any chemical modification that may be applied to modify the membrane surface charge, the pH of the electrolyte solution in contact with the charged sub-membrane surface. Advantageously, a minimum surface charge with a | zeta potential | $\geq$ 5 mV is preferred, more preferably $\geq$ 20 mV, most preferably $\geq$ 50 mV. The membrane surface charge may be adjusted based on the choice of the material making up the charged sub-membrane and/or based on the ionic force/concentration of the electrolyte solutions in contact with the membrane, as described previously.

(ii) Pore size: With respect to the semipermeable sub-membrane (e.g., when a composite membrane is used), the pore size will naturally depend on the size and/or the chemical characteristics of the solute to be filtered/separated. With respect to the charged sub-membrane element (which fulfills the "pumping function" in the system), the larger its pore size the larger the electroosmotic flow generated will be (see formula III). There are no other particular constraints concerning pore size except in cases where the charged sub-membrane element also fulfills the role of size-exclusion-type semipermeable sub-membrane (as is the case for example for asymmetric membrane comprising one material elements described herein, in which case to charged sub-membrane average pore size should be adapted to the size of the solute to be separated/filtered out). This is true for variants where a composite membrane is used, and also variants where a asymmetric membrane comprising two materials or a asymmetric membrane comprising one material is used (i.e., when a dual semipermeable/charged membrane element is used, such as in FIG. 1.b). Advantageously, the average pore size of the charged sub-membrane element (which fulfills the function of electro-inducing the flow of the solvent in the system) may be >10 nm, preferably >100 nm, more preferably > 1 $\mu$m, most preferably >500 $\mu$m.

(iii) Pore geometry: in general, semipermeable sub-membranes may not have a well-defined pore geometry (it can be "spaghetti-like for example). With respect to charged sub-membrane elements, there are no particular constraints concerning pore geometry: the system will work with any pore geometry (provided that the charged sub-membrane material bear a suitable surface charge, as further detailed herein), ranging from materials with symmetrical pore shape (such as anodic aluminum oxide, which features cylindrical pores) to materials having highly tortuous porosity (such as nylon or polycarbonate, which features conical pores). For example, porosities with nanotubular morphology i.e. cylindrical pores of circular cross-section, conical asymmetric pore shapes, honeycomb pore geometry, hourglass-shaped porosity, etc. may be used. The electro-osmotic flow across the charged sub-membrane may be optimized by modulating the pore geometry of the membrane. This may be achieved empirically by changing the pore geometry of the given charged sub-membrane, using methods well known in the art. Generally, the flow rate may be optimized if membrane pore geometry is preferably symmetrical and has little to no tortuosity. As such, nanotubular morphology i.e., of circular cross-section will have the effect of increasing flow rate across the membrane, as opposed to conical asymmetric pore shapes for example.

(iv) Electrical field intensity: for a given charged sub-membrane 30B and membrane surface area exposed to the electrolyte solution in the system according to the present invention, the flow rate increases as the applied current (hence the electrical field) between the electrodes increases. The choice of the applied current will depend in part on the type of filtration application (microfiltration (50-500 nm), ultrafiltration (1-50 nm), or nano-filtration ($\leq$1 nm)). Intensity and alternating electric field are chosen to maximize the flow. It will also depend on the number of pores through which the electro-osmotic flow can be induced, hence the surface area of the charged sub-membrane in contact with the electrolyte solution and the surface pore density of the charged sub-membrane. Generally, flow versus intensity (or current) curves are plotted for given conditions of pH concentration etc... in the electrolyte solution, to determine the optimal range of electrical field intensity. For ultrafiltration purposes, the resulting current is preferably lower than 100 A, more preferably lower than 1 A, more preferably lower than 100 mA. The electrical field intensity will preferably be adapted depending on the electrode and/or membrane used.

(v) Ionic force/concentration of the electrolyte solution: the flow rate is inversely proportional to the salt concentration in the electrolyte solution. The choice of the salt concentration in the electrolyte solution will depend on the flow rate that is to be achieved. For ultrafiltration purposes, the salt concentration in the electrolyte solution preferably ranges from 0.1 mM to 100 mM, preferably from 0.1 mM to 50 mM, more preferably from 0.1 mM to 10 mM, most preferably from 1 mM to 10 mM.

In summary, using a composite asymmetric membrane with nanometric average pore size (<500 nm), which bears a significant surface charge, we have developed a filtration process based on the application of an alternating electric field. When said membrane separates two vessels containing water (or other solvent) and mobile electrolytes (e.g. salts), the application of an alternating electric field between the two vessels of the cell generates an electro-osmotic flow (movement of water/solvent from one cell to the other, in the direction opposite that of normal osmotic flow) which can be expressed, for each single pore, by the following formula (formula III):

$$Q_{EO}(\omega) = \pi r^2 \left(\frac{D}{\omega}\right)^{1/2} \frac{\mu_{EO}}{L^2} \Delta V_m$$

where: V is the volume of net liquid in the direction of the electro-osmotic flow (L), t is the time of experiment in (s), : $\omega$ is the frequency (Hz), $r$ is the radius of the pore (m), $\mu_{EO}$ is the effective EO mobility, $\Delta V_m$ is the local electric field at membrane location (V), L is the membrane thickness (m);

Furthermore, the separator 60 allows to protect the membrane from any mechanical deformation when closing the cell and prevent from any shortcut in case the membrane get damaged during the process.

The present invention presents a supplementary advantage with the nature of the porous electrodes and the form of vessels allowing the evacuation of bubbles, thus the absence of accumulation of bubbles. In fact, any gas bubble formed due to parasitic electrochemical reaction could reduce the active membrane surface if not evacuated. In the present invention, the form of vessel allows an optimized evacuation of any bubble to limit their accumulation along membrane surface.

As discussed previously, the scarcity of drinking water resources is a major international concern. On the one hand, certain industrial wastes, particularly pharmaceutical and chemical, pose major problems for treatment plants. On the other hand, some arid countries massively exploit reverse osmosis desalination processes to obtain drinking water. However, the energy cost of these processes greatly increases the price of water, but also of the installations.

Alternating electric field filtration makes it possible to dispense with the application of high pressures in traditional water treatment processes. For example, for low pressure desalination, it is necessary to apply pressures exceeding the osmotic pressure (>30 bars); for sea water desalination, it is necessary to apply pressures > 60 bars and for brine treatment, it is necessary to apply pressures > 120 bars. These processes are expensive and complex to implement. The application of an alternating electric field reduces water treatment costs even for larger molecules (hormones, drugs...) which are sometimes difficult to eliminate. Combining the use of 2D nanomaterials (such as graphene oxide or boron nitride) with this filtration process also makes it possible to work with membranes of tunable porosity as 2D nanochannel can easily be chemically and geometrically modify, thus improving the possibility to adapt the purification application and improve permeability/selectivity threshold.

Applying alternative voltages has the main advantage to avoid any effects due to charge polarization or electrode saturation. However, this technique could not be applied on symmetric membranes since the average water flux over a cycle is null. On the other hand, with nanocomposite membrane displaying highly asymmetrical transport the average water flux over a cycle is not null leading to a net transport of mass from one side of the asymmetric membrane to the other.

The present invention reduces to practice the use of alternating electric field to induce separation and filtration, contrary to standard processes (typically reverse osmosis type) based on mechanical forcing by pressure difference. Therefore, the present invention offers a filtration process that is not based on a concentration difference (such as direct osmosis) or a pressure difference (reverse osmosis), but on the application of an alternating electric field. This provides a huge economic advantage: less expensive installations, cheaper to apply electricity than pressure, process avoiding mechanical stress (which usually uses pressures of the order of 50 bars on the membranes, which is not the case here). Hence the use of exotic membranes materials that could not mechanically withstand high mechanical reverse-osmotic pressures can be considered. This also has a significant ecological advantage, since it could provide an upstream solution for the filtration of complex molecules to be eliminated in purification plants. For example, an alternating electric field filtration system according to the present invention could be installed in plants in the pharmaceutical or textile industry, for wastewater pretreatment.

The present invention therefore provides an extremely valuable alternative for filtration/purification processes and water treatment processes, which overcomes the drawbacks of existing processes.

## EXAMPLES

The process and systems according to the present invention and their reduction to practice can be understood further by the examples that illustrate how some of the processes may be carried out. It will be appreciated, however, that these examples should not be construed to limit the invention.

## ABBREVIATIONS

GO: graphene oxide
PC: polycarbonate
$MoS_2$: Molybdenum disulfide

## MATERIALS AND METHODS

Commercial Graphene Oxide water dispersion of the concentration of 0,4 wt% was purchased from Gographene SA.

Polycarbonate track-etched membranes were supplied by Sterlitech Corporation. Potassium Chloride (>99%), Tris(2,2'-bipyridyl)dichlororuthenium (II) hexahydrate (99.95%) and testosterone (>99.9%) were purchased from Sigma-Aldrich.

All experiments were carried out at room temperature ($25 \pm 3°C$) and at neutral pH.

Experiments are performed using a potentiostat (Bio-logic, SP200) for electrical solicitations and measurements. The potentiostat is connected to the electrodes using thin platinum wires (0.5 mm diameter). The flow-rate response is of the system is measured using a flow rate sensor (Sensirion , SLF3S-0600F) whose sampling frequency limit is 1 ms.

For DC voltage experiments, a voltage drop is applied on the electrodes for 30 minutes. Current and flow rate are recorded at high sampling frequency (>10Hz) to catch the system dynamics responses at short times. Before each voltage application, the electrodes are regenerated to avoid any effects of polarization in the next experiment. This regeneration phase can be done as usually described in literature by short-circuiting, reversing polarity, or forcing the go-back to equilibrium (by applying 0V until the current reach a significantly low value (< 1mA) ) inside a distilled water solution. All the experiments presented herein are performed by applying 0V on the system between each test.

For AC voltage experiments, current and flow rate frequency sampling are chosen in order to catch a sufficient number of data points per period (>10) for its analysis. As for DC voltage experiments, the system is set back to equilibrium between each measure.

## Example 1 - **Composite membrane preparation and characterization**

The example 1 is set up in the system of Fig.1 (a).

The composite membranes were made by the deposition of the 2D nanolaminate of GO 30A onto a commercial macroporous polymer substrate 30B (Whatmann, PC membrane, pore size: 0.2 $\mu$m, pore density: 2 1013 pores/m$^2$).

The dispersion of GO in water was purchased from Graphenea SA (0.1 % in water). The latter was diluted, and further sonicated 10 minutes and centrifuged at 3 000 rpm 2 times to remove aggregates and obtain a dispersion of monolayers.

The overall VIRO composite membranes have been synthetized by depositing the 2D based filter using vacuum filtration: the solutions of exfoliated single-layer nanosheets dispersed in water was added dropwise on top of the polycarbonate (PC) substrate discs of 25 mm that present 24 $\pm$1 $\mu$m thickness and a porosity of 4.7% given by a track-Etch pores of 100 nm (Nuclepore Track-Etch Membrane, 25 mm, 0.1 $\mu$m) disposed on a Büchner funnel: one end was sealed and the other end was connected to a vacuum pump.

The surface charge of the PC membrane was measured using the conductance equation [1] and was determined to be around 0.2 mC/m$^2$.

The pore size of the 2D- lamellar graphene oxide (GO) membrane was measured using X-Ray diffraction performed on an Xpert Pro apparatus (Philips Pana Analytical, Cu K$\alpha$; $\lambda$_= 1.5418Å operating at 40 kV and 20 mA) and was determined to be 0.8 nanometer on average. The XRD diffractogram revealed a wide distribution of interlayer distances (from 0.7 to 1.4 nm).

The second side 30B of the asymmetric membrane element 30 has an average pore size 250 times smaller than that of the first side 30A.

## Materials characterization

The surface morphology of the composite membranes was observed with by optical microscopy in transmission mode and by a field emission scanning electronic microscope (FE-SEM) in a Thermo-FischerTM Quattro S instrument. Cross-section of the 2D nanolaminate layer was observed after tilting the sample holder 90°. X-Ray diffractograms of the membrane were collected in refraction mode by using a powder XRD diffractometer (Bruker®). The average interspace between the GO layers of the GO/PC membranes were determined by applying the Bragg law to the 001 peak of the recorded diffractograms.

## Example 2 - Alternate composite membrane preparation and characterization

The composite membranes were made according to the example 1, with a 2D nanolaminate made of MoS2.

MoS2 suspension has been obtained by previously reported chemical exfoliation of MoS2 bulk crystal and further sonication and centrifugation steps as mentioned in **[7].**

## Example 3 - Cells and electrodes

The VIRO cell is composed of two vessels 10A and 10B (feed & fresh water) separated by a composite membrane 30. Capacitive electrodes 20A and 20B are located in each vessel 10A and 10B to allow the application of the alternating electric field to generate EO flow. In order to maximize this flow, the electrodes 20A and 20B are compressed against the membrane 30. The distance between the electrodes is then low, leading to higher alternating electric field strength. The use of capacitive electrodes avoids the generation of large faradaic currents, and thus can limit the presence of electrochemical reactions that can disrupt the transport mechanisms through the membrane. A 100 $\mu$m thick highly porous polymeric felt is acting as a separator 60 between the electrode 20B and the second side of the membrane 30B to avoid direct electric contact between them.

The cell was fabricated by an additive manufacturing process (SLA), using a 3D printer (Formlabs, Form 3, 50mL of Formlab resin). Once the cell is assembled and closed, each vessel is connected to its reservoir by fluidic connections and a valve system.

The capacitive electrodes used are activated carbon electrodes (Gmbh, Kynol).

## Example 4 - Filtration of micropollutants

To probe the molecular sieving properties of our nanocomposite membranes, their performances for nanodecontamination and desalination were evaluated under VIRO experiments. The rejection rate under EO process for several typical micropollutants for which purification solutions which are scarce and costly were measured: an organic dye (Rhodamine B), acetaminophen (Paracetamol), caffeine and testosterone. The filtration of nanocontaminants has been realized according to the following steps:

i) Contacting a 30 mL volume V1 of a first electrolyte solution comprising nanocontaminants at a concentration of 10mM in water with a first porous electrode according to example 3;

ii) Contacting a second volume V2 of 10 mL of a second electrolyte solution comprising pure water with a second porous electrode according to example 3;

iii) Applying an alternating electric field of 10 V at 2.5 Hz between the first and second electrodes 20A and 20B resulting in solvent transfer and solute filtration through a membrane element according to example 1, the variation of volume V2, V2(nT), is $1.10^{-5}$ m$^3$ for n = 9 000 and T = 0.1 s;

iv) Bubbles generated during parasitic electrochemical reactions are automatically evacuated by gravity thanks to the optimized cell geometry (Venturi effect).

The analysis of water for micropollutants filtration is performed by absorbance analysis (Thermo scientific, Nanodrop), using light transmission analysis of a droplet from the samples (1 $\mu$L).

The concentration of NaCl in both reservoirs were measured using conductivity or Inductively Coupled Plasma Optical Emission Spectrometry (ICP-OES). ICP-OES measurements were obtained using an ICAP 7400 ICP-OES Analyzer spectrometer (THERMO SCIENTIFIC).

## RESULTS AND DISCUSSION

The tests demonstrated filtration of a volume of 10 mL of water containing a micropollutant model molecule at a 10mM feed concentration. The nanofiltration experiments resulted in more than 99.9% of rejection for all the micropollutants and both GO+PC and GO+MoS$_2$ asymmetric membrane (Fig. 8). Electroosmotic flow rate QEO up to 10 L.h.m$^2$ and 80 L.h.m$^2$ were obtained for GO+PC and GO+MoS2 asymmetric membrane respectively. Such testing allowed filtration within 150 minutes and 15 minutes respectively.

The asymmetry in EO transport proves that applying alternative voltages has the main advantage to avoid any effects due to charge polarization or electrode saturation. However, this technique could not be applied on symmetric membranes since the average water flux over a cycle is null. On the other hand, with nanocomposite membrane displaying highly asymmetrical transport the average water flux over a cycle is not null leading to a net transport of mass from one side of the membrane to the other.

## LIST OF REFERENCES

**1.** Becker N, Lavee D, Katz D. Desalination and Alternative Water-Shortage Mitigation Options in Israel: A Comparative Cost Analysis. JWARP. 2010;02(12):1042-56.

**2.** Spiritos E, Lipchin C. Desalination in Israel. In: Becker N, éditeur. Water Policy in Israel [Internet]. Dordrecht: Springer Netherlands; 2013 [cité 7 mars 2022]. p. 101-23. (Global Issues in Water Policy; vol. 4). Disponible sur: http://link.springer.com/10.1007/978-94-007-5911-4_7

**3.** Wang L, Dykstra JE, Lin S. Energy Efficiency of Capacitive Deionization. Environ Sci Technol. 2 avr 2019;53(7):3366-78.

**4.** Oren Y. Capacitive deionization (CDI) for desalination and water treatment - past, present and future (a review). Desalination. août 2008;228(1-3):10-29.

**5.** Al-Amshawee S, Yunus MYBM, Azoddein AAM, Hassell DG, Dakhil IH, Hasan HA. Electrodialysis desalination for water and wastewater: A review. Chemical Engineering Journal. janv 2020;380:122231.

**6.** Koros WJ, Zhang C. Materials for next-generation molecularly selective synthetic membranes. Nature Mater. mars 2017;16(3):289-97.

**7.** Ries L, Petit E, Michel T, Diogo CC, Gervais C, Salameh C, et al. Enhanced sieving from exfoliated MoS2 membranes via covalent functionalization. Nat Mater. oct 2019;18(10):1112-7.

**8.** Joshi RK, Alwarappan S, Yoshimura M, Sahajwalla V, Nishina Y. Graphene oxide: the new membrane material. Applied Materials Today. nov 2015;1(1):1-12.

**9.** Progress on free-standing and flow-through TiO2 nanotubes membranes, Guohua Lin, Kaiying Wang, Nils Hoivik, Henrik Jakobsen, Solar Energy Materials & Solar Cells, 98, 2012, pp 24-38; TiO2 nanotubes synthesis and applications, Poulomi Roy, Steffen Berger, Patrick Schmuki, Angewandte Chemistry Int. Ed, 50, 2011, pp 2904-2939.

**10.** Jung Tae Park, Won Seok Chi, Sang Jin Kim, Daeyeon Lee & Jong Hak Kim, Scientific Reports 4:5505, Nature, 2014.

**11.** Song J. et al., Preparation and Characterization of Graphene Oxide; Journal of Nanomaterials, 276143, 2014

## Claims

1. A process for purifying an electrolyte solution, comprising the following steps:

    i) Contacting a first volume V1 of a first electrolyte solution (11A) comprising a solute and a solvent with a first porous electrode (20A);
    ii) Contacting a second volume V2 of a second electrolyte solution (11B) comprising a solvent with a second porous electrode (20B);
    iii) Applying an alternating electric field between the first and second electrodes (20A) and (20B) resulting in solvent transfer and solute filtration through a membrane element (30), the variation of volume V2 being defined with the following formula (formula I) :

$$V_2(nT) = \mu_{EOeff}\, \Delta V_{eff}\, \pi\, r^2 n\, TL^{-1}$$

wherein T is the period of the applied signal (s), n the number of completed cycles, $\mu_{EOeff}$ is the effective electro-osmotic mobility ($m^2.V^{-1}.s^{-1}$), $\Delta V_{eff}$ is the local potential difference at the membrane (V), $r$ is the average radius of the pore of the membrane (m); and L is the membrane thickness (m);

    iv) Evacuating bubbles generated during parasitic electrochemical reactions
    wherein,

    the first electrode (20A) and the second electrode (20B) are separated by an asymmetric membrane element (30) comprising a first side (30A) and a second side (30B);
    the second side (30B) of the asymmetric membrane element (30) has an average pore size 1.1 to 10 000 times smaller than that of the first side (30A);
    a separator (60) is positioned between the electrode (20A or 20B) and the second side (30A) of the asymmetric membrane element (30);
    the asymmetry between the first and second sides of the membrane element (30) is geometric, physico-chemical, environmental nature, or a combination thereof; and
    the first and second electrodes (20A) and (20B) being operatively coupled via two current collectors (70A, 70B) to a source of electrical power (40).

2. The process according to any of the preceding claims, wherein the temperature of the first electrolyte solution (11A) and the second electrolyte solution (11B) differs by more than 1°C.

3. The process according to any one of the preceding claims, wherein the asymmetric membrane element (30) comprises a composite material with different properties of each element of the composite, an assembly of two materials of the same nature with at least one intrinsic property that differs, or a single material with at least one intrinsic property that differs from one side to the other.

4. The process according to any one of the preceding claims, wherein the first side (30A) comprises a semipermeable sub-membrane and the second side (30B) comprises a charged sub-membrane.

5. The process according to the preceding claim, wherein the second side (30B) of the asymmetric membrane element (30) is in contact with the second electrolytic solution 11B comprising a solvent.

6. The process according to claim 4, wherein the second side (30B) of the asymmetric membrane element (30) is in contact with the first electrolytic solution 11A comprising a solvent.

7. The process of any of claims 4 to 6, wherein the semipermeable sub-membrane (30A) comprises a steric exclusion separation membrane, an electrostatic exclusion separation membrane or a membrane capable of separating/filtering particular solid molecules or ions from a given electrolyte solution.

8. The process according to any of the preceding claims, wherein the first electrode (20A) and the second electrode (20B) are independently selected from capacitive electrodes or electrodes capable of maintaining an alternating electric field across a membrane.

9. The process according to any of the preceding claims, wherein the separator 60 is organic, inorganic or insulating composite.

10. The process according to any of the preceding claims, wherein the current collectors (70A, 70B) are independently selected from electrically conductive materials such as silver chloride (Ag/AgCl), carbon and platinum (C/Pt-), platinum (Pt), carbon (C-), graphite and iron complexes ($[Fe(CN)6]^{4-}/[Fe(CN)6]^{3-}$).

11. The process according to any one of the preceding claims, wherein the source of electrical energy (50) is generated by a device delivering only DC voltages and coupled to a DC/AC converter or by a device delivering an alternating electrical signal.

12. The process according to any of the preceding claims, wherein the solvent of the first electrolyte solution (11A) and the solvent of the second electrolyte solution (11B) may be different or identical.

13. The process according to any of the preceding claims, wherein the solvent of the first electrolytic solution (11A) and the solvent of the second electrolytic solution (11B) are independently selected from the following solvents: water, one or more organic solvents, one or more polar solvents, one or more apolar solvents or a mixture thereof.

14. A system for purifying an electrolyte solution comprising:

- a first vessel (40A) comprising a first volume V1 of a first electrolytic solution (11A) comprising a solute and a solvent;
- a second vessel (40B) comprising a second volume V2 of a second electrolyte solution (11B) comprising a solvent;
- a first electrode (20A) in contact with the first electrolyte solution (11A);
- a second electrode (20B) in contact with the second electrolyte solution (11B);
- an asymmetric membrane element (30) comprising a first side (30A), a second side (30B);
- a separator (60) positioned between the electrode (20A or 20B) and the second side (30B) of the asymmetric membrane element (30); and
- two current collectors (70A, 70B) operatively coupling the first and second electrodes (20A, 20B) to an electrical power source (40);
wherein,
- the first and the second vessels (40A) and (40B) are configured to evacuating bubbles generated during parasitic electrochemical reactions by the Venturi effect;
- the first and the second electrodes (20A, 20B) are porous electrodes grid electrode or any geometry wherein the electrolyte can diffuse through it;
- the asymmetric membrane element (30) having an asymmetry of a geometric, physico-chemical, environmental nature, or a combination thereof between the first and second sides of the membrane element (30);
- the second side (30B) of the asymmetric membrane element (30) has an average pore size 1.1 to 10 000 times smaller than that of the first side (30A).

15. The system according to the preceding claim, wherein the first and second vessels (40A, 40B) have a geometry that allows compression of the first and second electrodes.

FIG. 1

FIG. 2

FIG.3

FIG.4

FIG.5 (a)

FIG.5 (b)

FIG 5 (c)

FIG.5 (d)

FIG.6 (a)

FIG.6 (b)

PC + GO

PC + MoS$_2$

FIG.6 (c)

FIG. 7

FIG. 8

Europäisches
Patentamt

European
Patent Office

Office européen
des brevets

**EUROPEAN SEARCH REPORT**

Application Number

EP 23 31 5020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/052431 A1 (HELDAL TROND [CH] ET AL) 3 March 2011 (2011-03-03) | 1-9, 11-15 | INV. B01D61/42 |
| Y | * paragraphs [0002] - [0003], [0005] - [0007], [0082] - [0083], [0091], [0093], [0125], [0134], [0144], [0156]; claims; figures 10-11 * | 1-15 | B01D61/46 B01D67/00 B01D71/02 B01D71/50 C02F1/469 |
| Y | EP 3 862 069 A1 (CENTRE NAT RECH SCIENT [FR]; ECOLE NORMALE SUPERIEURE [FR] ET AL.) 11 August 2021 (2021-08-11) * paragraphs [0040] - [0041], [0051], [0055], [0081], [0094], [0118]; claims; figures 1-3; example 1 * | 1-15 | |
| Y | WO 2010/097581 A2 (OSMOTEX AG [CH]; HELDAL TROND [CH] ET AL.) 2 September 2010 (2010-09-02) * pages 3, 5, 13, last paragraph * | 1-15 | |
| Y | KR 2003 0063418 A (TERSANO INC) 28 July 2003 (2003-07-28) * paragraph [0198]; figure 39 * | 14,15 | |
| Y | US 2016/177931 A1 (SHIN WOONSUP [KR] ET AL) 23 June 2016 (2016-06-23) * claim 1; figure 4 * | 14,15 | |

-/--

TECHNICAL FIELDS SEARCHED (IPC)

B01D

The present search report has been drawn up for all claims

| Place of search | Date of completion of the search | Examiner |
|---|---|---|
| Munich | 28 June 2023 | Veríssimo, Sónia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 23 31 5020

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | RIES LUCIE ET AL: "Enhanced sieving from exfoliated MoSmembranes via covalent functionalization", NATURE MATERIALS, NATURE PUBLISHING GROUP UK, LONDON, vol. 18, no. 10, 26 August 2019 (2019-08-26), pages 1112-1117, XP036887949, ISSN: 1476-1122, DOI: 10.1038/S41563-019-0464-7 [retrieved on 2019-08-26] * page 1114, left-hand column, last paragraph * ----- | 3,4,7 | |
| | | | **TECHNICAL FIELDS SEARCHED (IPC)** |

The present search report has been drawn up for all claims

| Place of search | Date of completion of the search | Examiner |
|---|---|---|
| Munich | 28 June 2023 | Veríssimo, Sónia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

**EP 4 410 407 A1**

## ANNEX TO THE EUROPEAN SEARCH REPORT
## ON EUROPEAN PATENT APPLICATION NO.

EP 23 31 5020

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2023

| Patent document cited in search report | | Publication date | Patent family member(s) | | Publication date |
|---|---|---|---|---|---|
| US 2011052431 | A1 | 03-03-2011 | AT | 523692 T | 15-09-2011 |
| | | | EP | 2242926 A1 | 27-10-2010 |
| | | | JP | 5366978 B2 | 11-12-2013 |
| | | | JP | 2011514794 A | 06-05-2011 |
| | | | US | 2011052431 A1 | 03-03-2011 |
| | | | WO | 2009098486 A1 | 13-08-2009 |
| EP 3862069 | A1 | 11-08-2021 | CA | 3166244 A1 | 12-08-2021 |
| | | | CN | 115209976 A | 18-10-2022 |
| | | | EP | 3862069 A1 | 11-08-2021 |
| | | | EP | 4100148 A1 | 14-12-2022 |
| | | | IL | 295273 A | 01-10-2022 |
| | | | JP | 2023512573 A | 27-03-2023 |
| | | | KR | 20220162123 A | 07-12-2022 |
| | | | US | 2023149856 A1 | 18-05-2023 |
| | | | WO | 2021156393 A1 | 12-08-2021 |
| WO 2010097581 | A2 | 02-09-2010 | BR | PI1007807 A2 | 23-02-2016 |
| | | | CA | 2753463 A1 | 02-09-2010 |
| | | | CN | 102428274 A | 25-04-2012 |
| | | | EP | 2401809 A2 | 04-01-2012 |
| | | | JP | 5631338 B2 | 26-11-2014 |
| | | | JP | 2012518799 A | 16-08-2012 |
| | | | US | 2012024702 A1 | 02-02-2012 |
| | | | WO | 2010097581 A2 | 02-09-2010 |
| KR 20030063418 | A | 28-07-2003 | AT | 439148 T | 15-08-2009 |
| | | | AU | 2907902 A | 24-06-2002 |
| | | | CN | 1501891 A | 02-06-2004 |
| | | | EP | 1351893 A1 | 15-10-2003 |
| | | | HK | 1061382 A1 | 17-09-2004 |
| | | | JP | 2004525748 A | 26-08-2004 |
| | | | KR | 20030063418 A | 28-07-2003 |
| | | | KR | 20070091240 A | 07-09-2007 |
| | | | KR | 20080074232 A | 12-08-2008 |
| | | | US | 2002185423 A1 | 12-12-2002 |
| | | | WO | 0248054 A1 | 20-06-2002 |
| US 2016177931 | A1 | 23-06-2016 | CN | 105612350 A | 25-05-2016 |
| | | | EP | 3070331 A1 | 21-09-2016 |
| | | | US | 2016177931 A1 | 23-06-2016 |
| | | | WO | 2015030466 A1 | 05-03-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3862069 A

**Non-patent literature cited in the description**

- **BECKER N ; LAVEE D ; KATZ D.** Desalination and Alternative Water-Shortage Mitigation Options in Israel: A Comparative Cost Analysis. *JWARP.,* 2010, vol. 02 (12), 1042-56
- Desalination in Israel. **SPIRITOS E ; LIPCHIN C.** Water Policy in Israel. Springer Netherlands, 2013, vol. 4, 101-23
- **WANG L ; DYKSTRA JE ; LIN S.** Energy Efficiency of Capacitive Deionization. *Environ Sci Technol.,* 02 April 2019, vol. 53 (7), 3366-78
- **OREN Y.** Capacitive deionization (CDI) for desalination and water treatment - past, present and future (a review. *Desalination,* August 2008, vol. 228 (1-3), 10-29
- **AL-AMSHAWEE S ; YUNUS MYBM ; AZODDEIN AAM ; HASSELL DG ; DAKHIL IH.** Hasan HA. Electrodialysis desalination for water and wastewater: A review. *Chemical Engineering Journal,* January 2020, vol. 380, 122231
- **KOROS WJ ; ZHANG C.** Materials for next-generation molecularly selective synthetic membranes. *Nature Mater.,* March 2017, vol. 16 (3), 289-97
- **RIES L ; PETIT E ; MICHEL T ; DIOGO CC ; GERVAIS C ; SALAMEH C et al.** Enhanced sieving from exfoliated MoS2 membranes via covalent functionalization. *Nat Mater.,* October 2019, vol. 18 (10), 1112-7
- **JOSHI RK ; ALWARAPPAN S ; YOSHIMURA M ; SAHAJWALLA V ; NISHINA Y.** Graphene oxide: the new membrane material. *Applied Materials Today.,* November 2015, vol. 1 (1), 1-12
- **GUOHUA LIN ; KAIYING WANG ; NILS HOIVIK ; HENRIK JAKOBSEN.** Progress on free-standing and flow-through TiO2 nanotubes membranes. *Solar Energy Materials & Solar Cells,* 2012, vol. 98, 24-38
- **POULOMI ROY ; STEFFEN BERGER ; PATRICK SCHMUKI.** TiO2 nanotubes synthesis and applications. *Angewandte Chemistry Int. Ed,* 2011, vol. 50, 2904-2939
- **JUNG TAE PARK ; WON SEOK CHI ; SANG JIN KIM ; DAEYEON LEE ; JONG HAK KIM.** Scientific Reports. *Nature,* 2014, vol. 4, 5505
- **SONG J. et al.** Preparation and Characterization of Graphene Oxide. *Journal of Nanomaterials,* 2014, 276143